# EUROPEAN PATENT APPLICATION

(11) **EP 1 691 280 A1**
(43) Date of publication of application: **16.08.2006**
(21) Application number: 03777293.6
(22) Date of filing: 05.12.2003
(51) Int. Cl.: G06F 9/445

(54) **DATA MANAGEMENT SYSTEM, DATA MANAGEMENT DEVICE, DATA MANAGEMENT METHOD, DATA SUPPLY SYSTEM, DATA MANAGEMENT PROGRAM, AND COMPUTER-READABLE RECORDING MEDIUM CONTAINING THE PROGRAM**

(71) Applicant: FUJITSU LIMITED, Kawasaki-shi, Kanagawa 211-8588 (JP)
(72) Inventor: TERAZANO, Kohei Fujitsu Limited, Kawasaki-shi, Kanagawa 211-8588 (JP); OKADA, Yoshiyuki Fujitsu Limited, Kawasaki-shi, Kanagawa 211-8588 (JP)
(74) Representative: Sunderland, James Harry
(86) International application number: PCT/JP2003/015601
(87) International publication number: WO 2005/055055

(57) **Abstract**

A data management system presents to an information processing apparatus the data of latest version. The data management system includes a first difference data generation unit (11a) generating a difference data which can revise a data stored in a data storage unit (20a) to a data of latest version, and a second difference data generation unit (12,12',12") creating, based on the difference data stored in a difference data storage unit (18) and on a difference data, a difference data which can be revised from each of versions older than the data stored in the data storage unit (20a) to a data of latest version, which data management system executes revision processing of a data of the information processing apparatus at high-speed, and when a data of latest version is generated, the latest version data can be registered at high-speed thereby reducing data capacity to be used.

## Description

### Technical Field

The present invention relates to version management of a data (program) stored in an information processing apparatus such as a computer or a mobile phone communicably connected by means of, for example, LAN (Local Area Network) or the like and further relates to a data management system, a data management apparatus, a data management method, a data supplying system, a data management program and a computer-readable recording medium with the program recorded therein, preferably used for revision processing for revising a data in an information processing apparatus to a latest version.

### Background Art

For example, an information processing apparatus of built-in type system such as a mobile phone is operated by executing a software (program) stored in an internal memory by a CPU (Central Processing Unit), and these programs are in some cases revised (version upgraded) when needed due to removal of a defect, specification alteration, function expansion or the like.

In a case such a program is revised and a new version program is generated, it is preferable to present promptly a program of the latest version to an information processing apparatus and to revise the program to latest version in the information processing apparatus.

Whenever a program of a latest version is generated, instead of transmitting entire program of the latest version to an information processing apparatus via a communication line such as LAN, there is known such a method that a difference data in which exists an altered part only is transmitted thereby reducing a data communication amount in the communication line or shortening a time required for revision processing of the program in the information processing apparatus.

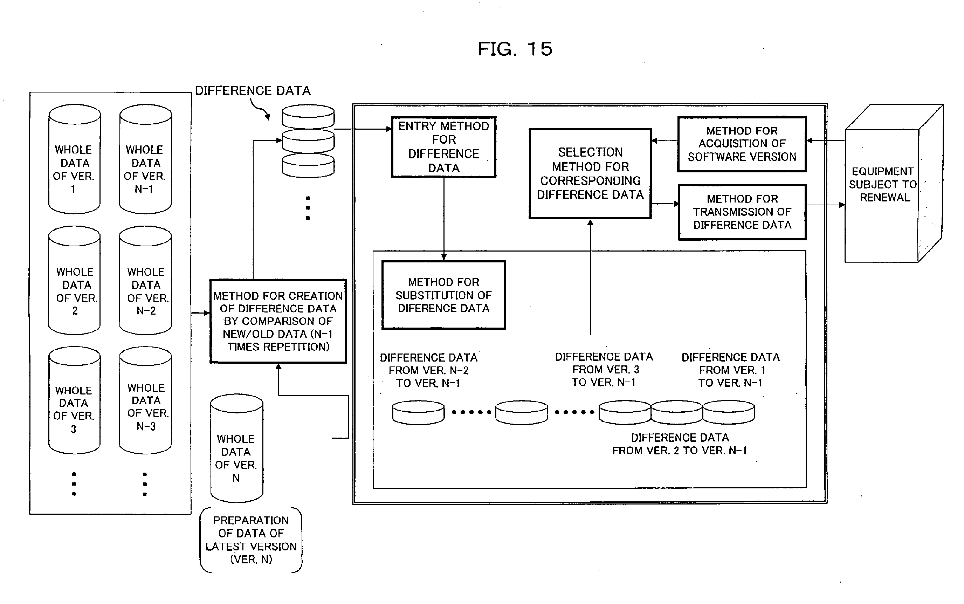

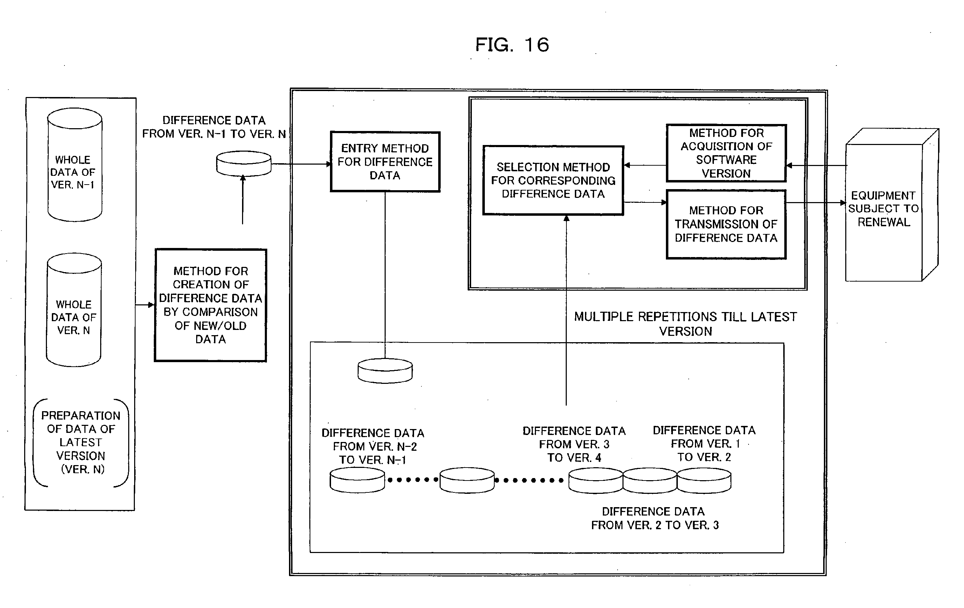

FIG. 15 and FIG. 16 are to explain a method for revision management of a conventional program, respectively. For example, Japanese Patent Laid-Open (Kokai) HEI 11-272471 (patent document 1 shown below), Japanese Patent Laid-Open (Kokai) 2000-10787 (patent document 2 shown below), Japanese Patent Laid-Open (Kokai) 2002-91776 (patent document 3 shown below), and Japanese Patent Laid-Open (Kokai) HEI 10-3415 (patent document 4 shown below) disclose systems for transmitting a difference data (version upgrade data) between a program currently used by each of computers and latest version program thereof to computers (computing machine) connected via a network (communication line).

FIG. 15 is a drawing showing schematically a functional composition of a conventional system according to patent documents 1 and 2, where as shown in FIG. 15, in the conventional system according to the patent documents 1 and 2, a transmission side (program loader) maintains entire program of each version, stores and manages a difference data between a latest version program and a program of each version, and transmits this difference data to a receiving side computer (computing machine) connected via the communication line.

Further, FIG. 16 is a drawing showing schematically a functional composition of a conventional system according to patent documents 3 and 4, where as shown in FIG. 16, in the conventional system according to the patent documents 3 and 4, a server side maintains entire program of a latest version (Ver. N-1), and maintains, for each of versions from oldest version (e.g., Ver. 1) to latest version (Ver. N-1) in a system, a difference data (e.g., from Ver. 1 to Ver. 2, from Ver. 2 to Ver.3 ..., from Ver. N-2 to Ver. N-1) for the sake of revision to each one newer version. In other words, together with the entire program of a latest version (Ver. N-1), a difference data between adjoining generations is held for each of versions.

In the conventional method shown in FIG. 16, when a program of a client is revised to a latest version, transmission of a difference data corresponding to each of versions to the client and expansion (revision processing) using the difference data in the client are repeated in an order of program version of the program of the client, till the program of the client is revised to the latest version.

However, with the conventional method shown in FIG. 15, there is such a drawback that since entire program of each of versions is stored, an amount of data to be held becomes large, manufacturing cost of hardware is increased to secure a storage area of such data, and this is not economical. Particularly, as the version number increases while revisions of a program are made many times, an amount of data to be stored also increases. Further, when a new version (Ver. N) of a program is generated, and when this latest program is registered, a difference data should be generated to revise a program of each of existing versions to a program of latest version newly generated, using a comparison tool or the like for new/old program, and this also poses a problem in that difference data generation process is troublesome and time-consuming.

Further, with prior art as shown in FIG. 16, when a program of a client is revised to a latest version, transmission of a difference data corresponding to each version to a client and expansion (revision processing) using the difference data in the client should be executed repeatedly till the program of the client is revised to the latest version, and for example, with a version of a program of the client which is older several generations, there is a problem that revision processing is troublesome and time-consuming.

The present invention has been made in consideration of above problems and an object of the present invention is to provide, a data management system, a data management apparatus, a data management method, a data supplying system, a data management program and a computer-readable recording medium in which is recorded the program, which execute revision processing in a high-speed manner, and for a case where a latest version data is generated, are able to register a data of this latest version in a high-speed manner and to reduce a data capacity used.
[Patent document 1] Japanese Patent Laid-Open (Kokai) HEI 11-272471
[Patent document 2] Japanese Patent Laid-Open (Kokai) 2000-10787
[Patent document 3] Japanese Patent Laid-Open (Kokai) 2002-91776
[Patent document 4] Japanese Patent Laid-Open (Kokai) HEI 10-3415

### Disclosure of the Invention

In order to accomplish aforementioned object, a data management system of the present invention is communicably connected with an information processing apparatus capable of storing a data and manages the data of a plurality of versions in an attempt to present the information processing apparatus the data of latest version, and includes a latest version data entry unit capable of entering a data of said latest version (Ver. N), a data storage unit for storing a latest version data (Ver. N-1) which is older than the latest version in the data management system, a difference data storage unit for storing a difference data which can be revised from each of versions older than a data stored in said data storage unit to the same version (Ver. N-1) of a data stored in said data storage unit, a first difference generation unit for generating a difference data which can be revised, based on a data (Ver. N-1) stored in the data storage unit and a data of said latest version (Ver. N) entered by the latest version data entry unit, from a data stored in the data storage unit to a data of said latest version (Ver. N), and a second difference generation unit for generating a difference data which can be revised, based on the difference data stored in the difference data storage unit and the difference data generated by the first difference generation unit, from each of versions older than a data stored in said data storage unit to a data of said latest version (Ver. N).

In addition, a new/old difference data replacement unit for replacing a difference data stored in said difference data storage unit with a difference data generated by said first difference generation unit and a difference data generated by said second difference generation unit, and a new/old data replacement unit for replacing a data stored in said data storage unit with a data of said latest version (Ver. N) entered from said latest version data entry unit may be provided.

Further, said difference data storage unit has a plurality of difference data, and may have a selection unit for selecting one difference data according to a version of the data stored in an information processing apparatus out of a plurality of said difference data and a presentation unit for presenting the difference data selected by the selection unit.

Furthermore, the second difference data generation unit performs, based on the difference data stored in the difference data storage unit, and on the difference data generated by the first difference data generation unit, the steps of:
setting copying, for such a portion where both a difference data stored in said difference data storage unit and a difference data generated by said first difference data generation unit denote "copying", to the position in a difference data to be generated;
setting new, for such a portion where at least one of a difference data stored in said difference data storage unit and a difference data generated by said first difference data generation unit denotes "new", to the position in a difference data to be generated;
setting movement, for such a portion where a difference data stored in said difference data storage unit is "movement" and a difference data generated by said first difference data generation unit denotes "copying" or "movement", and for such a portion where a difference data stored in said difference data storage unit denotes "copying" and a difference data generated by said first difference data generation unit denotes "movement", to the position in a difference data to be generated.

Besides, the second difference data generation unit, based on the difference data stored in the difference data storage unit, and on the difference data generated by the first difference data generation unit, (i) generates a second dummy data of the same version (Ver. N-1) of a data stored in said data storage unit by applying the difference data stored in said difference data storage unit to a first dummy data generated based on a data of a version older than a data stored in said data storage unit, (ii) generates a third dummy data of the same version of a data of said latest version (Ver. N) and then by applying a difference data generated by said first difference data generation unit to the second dummy data, and (iii) generates a difference data, which can be revised from each of versions older than a data stored in said data storage unit to a data of said latest version (Ver. N), based on the third dummy data.

Further, the second difference data generation unit, based on a difference data stored in the second difference data storage unit, on a difference data generated by said first difference data generation unit, and on a data of said latest version (Ver. N) entered by the latest version data entry unit, performs the steps of:
(1) generating a first dummy data based on a first dummy empty data (empty data of Ver. N-1), on a data of said latest version (Ver. N) entered by the latest version data entry unit, and on a difference data (from Ver. N-1 to Ver. N) generated by said first difference data generation unit, by analyzing a difference data (from Ver. N-1 to Ver. N) generated by said first difference data generation unit, by copying a part of a data of said latest version (Ver. N) into the first dummy empty data, and by setting a dummy data in an area other than said copied data in the dummy empty data;
(2) generating a second dummy data based on a second dummy empty data (empty data of Ver. X), on the first dummy data, and on a difference data (From Ver. X to Ver. N-1) stored in said difference data storage unit, by analyzing a difference data (from Ver. X to Ver. N-1) stored in said difference data storage unit, by copying a part of said first dummy data into the second dummy empty data, and by setting a dummy data in an area other than said copied data in the second dummy empty data; and
(3) creating a difference data (From Ver. X to Ver. N) which can be revised from each of versions older than a data stored in said data storage unit to a data of said latest version (Ver. N) by comparison between the second dummy data and said latest version (Ver. N) data entered by the latest version data entry unit.

In addition, a data management system which is connected communicapably with an information processing apparatus capable of storing a data, manages the data of a plurality of versions and then manages the data in an attempt to present the information processing apparatus the data of a latest version comprising:
a latest version data entry unit capable of entering a data of said latest version (Ver. N);
a data storage unit for storing the data older than said latest version (Ver. N);
a first difference data storage unit for storing a plurality of difference data which can revise a data stored in said data storage unit to a data of each of a plurality of said versions (Ver. X);
a data creation unit for creating, based on a data stored in said data storage unit and on each difference data stored in the first difference data storage unit, a data of each version;
a difference data generation unit for generating a difference data which can be revised, based on a data of said each version (Ver. X) created by the data creation unit and a data of said latest version (Ver. N) entered from the latest version data entry unit, from a data of said each version (Ver. X) to a data of said latest version (Ver. N) ; and
a second difference data storage unit for storing the difference data generated by the difference data generation unit.

Of a plurality of said versions, the data of the oldest version may be stored in the data storage unit.

A new/old difference data replacement unit which, when a difference data generated by said difference data generation unit is stored to the second difference data storage unit, replaces the difference data which can be revised from a data of said each version (Ver. X) stored in the second difference data storage unit to the data of version (Ver. N-1) older than said latest version (Ver. N) with a difference data generated by said difference data generation unit (11b).

Further, a difference data deletion unit which is capable of selectively deleting, of a plurality of said difference data stored in the second difference data storage unit, the difference data corresponding to a particular version.

Further, a data management system which is connected communicapably with an information processing apparatus capable of storing a data, manages the data of a plurality of versions and then manages the data in an attempt to present the information processing apparatus the data of a latest version comprising:
a latest version data entry unit capable of entering a data of said latest version (Ver. N);
a data storage unit for storing the data older than said latest version (Ver. N);
a first difference data storage unit for storing a difference data which can revise a data stored in said data storage unit to a data of latest version (Ver. N-1) in the data management system, which version (Ver. N-1) is older than a latest version (Ver. N) entered from said latest version data entry unit;
a data creation unit for creating, based on a data stored in said data storage unit (20b) and a difference data stored in the first difference data storage unit, a data of a version (Ver. N-1) older than a latest version entered from said latest version data entry unit and of latest version (Ver. N-1) in the data management system;
a first difference data generation unit for generating a difference data which can be revised, based on a data (Ver. N-1) created by the data creation unit and a data of said latest version (Ver. N) entered from the latest version data entry unit, from a data of latest version (Ver. N-1) in the data management system, which is of a version (Ver. N-1) older than a latest version entered form said latest version data entry unit, to a data of latest version (Ver. N) entered from said latest version data entry unit;
a second difference data storage unit for storing a difference data which can be revised from each of versions (Ver. X) older than a data of a latest version (Ver. N-1) in the data management to a version (Ver. N-1) same as a data of latest version (Ver. N-1) in the data management system; and
a second difference data generation unit for creating a difference data which can be revised, based on the difference data stored in the second difference data storage unit and the difference data generated by the first difference data generation unit, from each of versions older than a data of a latest version (Ver. N-1) in the data management, which data older than a data of said latest version (Ver. N) entered from a latest version data entry unit, to a data of said latest version (Ver. N) entered from the latest version data entry unit.

A data management apparatus which is connected communicapably with an information processing apparatus capable of storing a data, manages the data of a plurality of versions and then manages the data in an attempt to present the information processing apparatus the data of a latest version comprising:
a latest version data entry unit capable of entering a data of said latest version (Ver. N);
a data storage unit for storing a data of a latest version (Ver. N-1) in the data management system older than the latest version;
a difference data storage unit for storing a difference data which can be revised from each of versions older than a data stored in said data storage unit to the same version (Ver. N-1) of a data stored in said data storage unit;
a first difference data generation unit for generating a difference data which can be revised, based on a data stored in the data storage unit and a data of said latest version (Ver. N) entered by the latest version entry unit, from a data stored in the data storage unit to a data of said latest version (Ver. N); and
a second difference data generation unit for generating a difference data which can be revised, based on the difference data stored in the difference data storage unit and the difference data generated by the first difference data generation unit, from each of versions older than a data stored in said data storage unit to a data of said latest version (Ver. N).

Further, a data management method according to the present invention is a data management method for managing the data in an attempt to present an information processing apparatus capable of storing a data, the data of a latest version comprising:
a latest version data entry step capable of entering a data of said latest version (Ver. N);
a data storage step for storing the data of version older than said latest version (Ver. N);
a first difference data storage step for storing a plurality of difference data which can revise the data stored in said data storage step to a data of each of a plurality of said versions;
a data creation step for creating a data of each of versions based on a data stored in said data storage step and each of difference data stored in the first difference data storage step;
a difference generation step for generating a difference data which can be revised, based on a data of each of said versions created in the data creation step and a data of said latest version (Ver. N) entered in the latest version data entry step, from a data of each of said versions to a data of said latest version (Ver. N); and
a second difference data storage step for storing the difference data generated in the difference generation step.

Further, a data supplying system which is connected communicapably with an information processing apparatus capable of storing a revisable data, manages the data of a plurality of versions in an attempt to present the information processing apparatus the data of a latest version comprising:
a latest version data storage unit for storing a data of said latest version;
a difference data storage unit for storing a plurality of difference data which can be revised from each of versions older than said latest version (Ver. N) to a data of said latest version;
a selection unit for selecting from a plurality of said difference data stored in the difference data storage unit, one difference data according to a version of the data stored in the information management apparatus; and
a presentation unit for presenting to the information processing apparatus the difference data selected by the selection unit.

Further, a data supplying system which is connected communicapably with an information processing apparatus capable of storing a data, manages the data of a plurality versions in an attempt to present the information processing apparatus the data of a latest version comprising:
a data storage unit for storing the data of a version older than said latest version;
a first difference data storage unit for storing a plurality of difference data which can revise a data stored in said data storage unit to a data of each of versions;
a second difference data storage unit for storing a plurality of difference data which can be revised from each of versions older than said latest version to a data of said latest version;
a selection unit for selecting from a plurality of said difference data stored in the second difference data storage unit, one difference data according to a version of the data stored in the information management apparatus; and
a presentation unit for presenting to the information processing apparatus the difference data selected by the selection unit.

A data management program according to the present invention is a data management program which causes a computer to execute a data management function that manages the data in an attempt to present an information processing apparatus capable of storing a data, the data of latest version, the program causing a computer to execute:
a latest version data entry step for entering a data of said latest version (Ver. N);
a data storage step for storing a data of a latest version (Ver. N-1) out of versions older than a data entered in said latest version data entry step, which data older than the latest version;
a difference data storage step for storing a difference data which can be revised from each of versions older than a data stored in said data storage step to the same version of a data stored in said data storage unit;
a first difference generation step for generating a difference data which can be revised, based on a data (Ver. N-1) stored in the data storage step and a data of said latest version (Ver. N) entered in the latest version data entry step, from a data stored in the data storage step to a data of said latest version (Ver. N); and
a second difference generation step for generating a difference data which can be revised, based on the difference data stored in the difference data storage step and the difference data generated in the first difference generation step, from each of versions older than a data stored in said data storage step to a data of said latest version (Ver. N).

A data management program according to the present invention is a data management program which causes a computer to execute a data management function that manages the data in an attempt to present an information processing apparatus capable of storing a data, the data of latest version, the program causing a computer to execute:
a latest version data entry step capable of entering a data of said latest version (Ver. N);
a data storage step for storing the data of version older than said latest version (Ver. N);
a first difference data storage step for storing a plurality of difference data which can revise the date stored in said data storage step to a data of each of a plurality of said versions;
a data creation step for creating a data of each of versions based on-a data stored in said data storage step and each of difference data stored in the first difference data storage step;
a difference generation step for generating a difference data which can be revised, based on a data of each of said versions created in the data creation step and a data of said latest version (Ver. N) entered in the latest version data entry step, from a data of each of said versions to a data of said latest version (Ver. N); and
a second difference data storage step for storing the difference data generated in the difference generation step.

Incidentally, in a computer-readable recording medium according to the present invention is a recording medium in which is recorded aforementioned data management program.

As mentioned, according to the present invention, the following effects or advantages are made available:
(1) One-time revision processing can revise a data from each of versions to a latest version and revision of a data can be performed in a short time.
(2) A capacity required for storage of a data and difference data can be configured small.
(3) A latest data can be registered with ease thereby reducing man-hours of a system administrator.
(4) Even a case where a latest version data is newly generated, a difference data which can be revised to a latest data at any time can be registered thereby enhancing reliability of a system.
(5) A difference data for a latest version can be generated in a short time.
(6) A difference data for a prescribed version can be obtained easily and at high speed thereby enhancing convenience.
(7) A capacity of a difference data can be reduced.

### Brief Description of the Drawings

FIG. 1 is a drawing showing schematically a composition of a data management system (data supplying system) according to a first embodiment of the present invention.
FIG. 2 is a drawing showing an example of difference data storage information table in the data management system according to the first embodiment of the present invention.
FIG. 3 is a flowchart illustrating difference data generation method by a first difference data generation unit in the data management system according to the first embodiment of the present invention.
FIGS. 4A and 4B are each flowcharts illustrating difference data generation method by a second difference data generation unit in the data management system according to the first embodiment of the present invention.
FIG. 5 is a drawing explaining, in the data management system according to the first embodiment of the present invention, when a latest version data is generated, a method for registration of a difference data for a data of the latest version.
FIG. 6 is a flowchart illustrating a method for revision of a data of an information processing apparatus in the data management system according to the first embodiment of the present invention.
FIGS. 7A and 7B are each flowchart illustrating a method for generation of a difference data by a second difference data generation unit in a modification of the data management system as the first embodiment according to the present invention.
FIG. 8 is a drawing showing an example of a dummy data used in a first modification according to the first embodiment of the present invention.
FIG. 9 is a drawing showing schematically a composition of a second modification of data management system according to the first embodiment of the present invention.
FIGS. 10A and 10B are each flowchart illustrating a method for generation of a difference data by the second difference data generation unit in the second modification of the data management system according to the first embodiment of the present invention.
FIG. 11 is a drawing showing schematically a composition of the data management system according to the secorid embodiment of the present invention.
FIG. 12 is a drawing explaining, in the data management system according to the second embodiment of the present invention, when a latest version data is generated, a method for registration of a difference data of the latest version.
FIG. 13 is a drawing showing schematically a composition of a modification of the data management system according to the second embodiment of the present invention.
FIG. 14 is a drawing showing schematically a composition of the data management system according to a third embodiment of the present invention.
FIGS. 15 and 16 are each drawing explaining a method for revision management of conventional programs.

### Best Modes for Implementing the Invention

Referring now to the drawings, embodiments of the present invention will be described.

### (A) Explanation of first embodiment

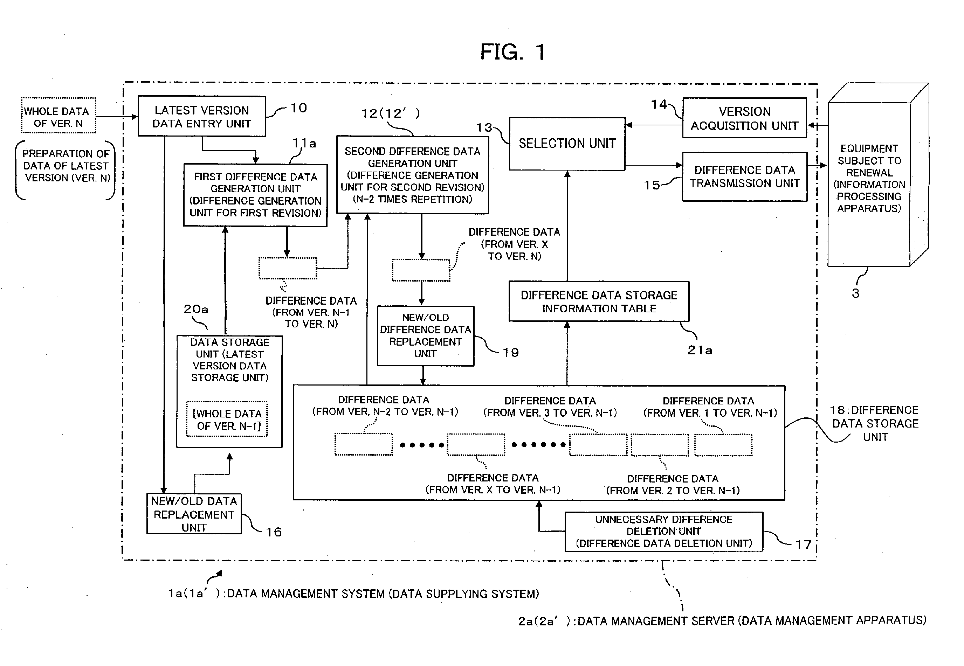

FIG. 1 is a drawing showing schematically a composition of the data management system (data supplying system) as the first embodiment of the present invention.

Data management system 1a of the first embodiment is communicably connected with information processing apparatus 3 (apparatus subject to renewal) capable of storing a data and a program (hereinafter referred to simply as data), manages a data of a plurality of versions, and manages these data in an attempt to present information processing apparatus 3 a data of latest version.

Incidentally, as a data to be managed in the data management system 1a, various programs (software) executed in the information processing apparatus 3, various data and the like used by the program are cited, while concepts including these programs, data and the like are hereinafter collectively referred to simply as data.

In addition, in this embodiment, of a plurality of data versions registered in the data management system 1a (existing version), the latest version is Ver. N-1 and a latest version to be registered to this data management system 1a is indicated by Ver. N.

As shown in FIG. 1, the data management system 1a as the first embodiment of the present invention is constituted of a data management server (data management apparatus) 2a which is communicably connected with the information processing apparatus 3. This data management server 2a is realized by, for example, a computer equipped with a server function, and as shown in FIG. 1, is configured by a latest version data entry unit 10, a first difference data generation unit (first difference data generation unit) 11a, a second difference data generation unit (second difference data generation unit)12, a selection unit 13, a version acquisition unit 14, a difference data transmission unit (presentation unit) 15, a new/old data replacement unit 16, an unnecessary difference deletion unit (difference data deletion unit) 17, a difference data storage unit 18, a new/old difference data replacement unit 19, a data storage unit (latest version data storage unit) 20a, and a difference data storage information table 21a.

The management server 2a and the information processing apparatus 3 are connected by various communication methods regardless of wired or wireless, for example, LAN (Local Area Network), USB (Universal Serial Bus), wireless LAN, Bluetooth or the like.

The latest version data entry unit 10 is for acquisition (entry) of a latest version data (Ver. N) and is realized, for example, by various devices having entry function such as a keyboard, mouse or flexible disc drive in a computer system, as well as an API (Application Program Interface) or the like in an application.

The data storage unit (latest version data storage unit) 20a is a version older than a latest version (Ver. N) entered by the latest version data entry unit 10, and is for storing a data which has been a latest version (Ver. N-1) till a data of such latest version (Ver. N) is generated (N is an integer). In other words, entire data of the latest version in the data management server 2a is stored. This data storage unit 20a is realized, for example, by a memory unit such as a hard disc, memory or the like in a computer system.

The difference data storage unit 18 is for storing a difference data which can be revised from each of versions older than a data stored in the data storage unit 20a (e.g., Ver. 1 - Ver. N-2) to the version (Ver. N-1) same as that of a data stored in the data storage unit 20a.

In the following description, an arbitrary version of a data is in some cases indicated as Ver. X using a parameter X (where; 1 ≤ X ≤ N-2).

This difference data storage unit 18 is also realized by a memory unit, for example, a hard disc, memory or the like in a computer system with a similar manner as the data storage unit 20a.

In addition, in the embodiments of the present invention, a difference data is constituted of three types of difference codes of "New", "Copy", and "Movement (movement of reference pointer)", and these difference codes have attributes of "Copying length", "New data length", and "Movement amount" respectively.

The difference data storage information table 21a is for managing a storage position of each difference data stored in the difference data storage unit 18.

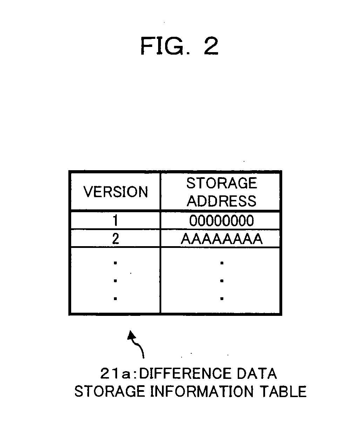

FIG. 2 is a drawing showing an example of the difference data storage information table 21a in the data management system 1a as the first embodiment of the present invention. As shown in FIG. 2, the difference data storage information table 21a corresponds to a version before revision and the current version. Namely, a data of the version in question is registered being linked with storage position (storage address) of a difference data to be revised, and storage position of a difference data corresponding to a particular version can be referred to or acquired if a selection unit 13 which will be described later refers to this difference data storage information table 21a.

Further, this difference data storage information table 21a is designed to be revised together when a new/old difference data replacement unit 19 (described later) executes replacement of a difference data stored in the difference data storage unit 18.

Further, in a case where the unnecessary difference deletion unit 17 (described later) deleted a particular difference data from the difference data storage unit 18, the unnecessary difference deletion unit 17 is also designed to delete storage position of the difference data in the difference data storage information table 21a.

The new/old difference data replacement unit 19 is for replacing a difference data stored in the difference data storage unit 18 with a difference data generated by the first difference data generation unit 11a and a difference data generated by the second difference data generation unit 12. The new/old difference data replacement unit 19 is designed to, whenever the first difference data generation unit 11a generates a difference data, add newly a difference data thereof, and whenever the second difference data generation unit 12 generates a difference data, replace a difference data of the same version (version before revision) stored in the difference data storage unit 18 with a new difference data generated by the second difference data generation unit 12.

Further, the new/old difference data replacement unit 19 is designed to, when a difference data generated by the first difference data generation unit 11a is added newly to the difference data storage unit 18, record storage position (storage address) of the difference data into the difference data storage information table 21a. Furthermore, the new/old difference data replacement unit 19 is designed to, whenever a difference data generated by the second difference data generation unit 12 is replaced with a difference data stored in the difference data storage unit 18 and is registered, register (overwriting, replacement) the storage position (storage address) in the difference data storage unit 18 to an item corresponding to the version (version before revision) in the difference data storage information table 21a.

In this data management system 1a, when a difference data corresponding to a version of the revision target data in the information processing apparatus 3 is selected and acquired from a plurality of difference data stored in the difference data storage unit 18, and the difference data is applied to the revision target data in the information processing apparatus 3, the data can be revised to a latest version.

Incidentally, the difference data storage unit 18 is also realized, for example, by a memory unit such as a hard disc or memory in a computer system.

The new/old data replacement unit 16 is for replacing a data stored in a data storage unit (Ver. N-1) with a latest version data (Ver. N) entered from the latest version data entry unit 10.

The first difference data generation unit 11a is for generating a difference data which can be revised, based on a data (Ver. N-1) stored in the data storage unit 20a and a latest version data (Ver. N) entered by the latest version data entry unit 10, from a data stored in the data storage unit 20a to a data of said latest version (Ver. N), which can be realized by, for example, new/old software comparison tool (program) or the like.

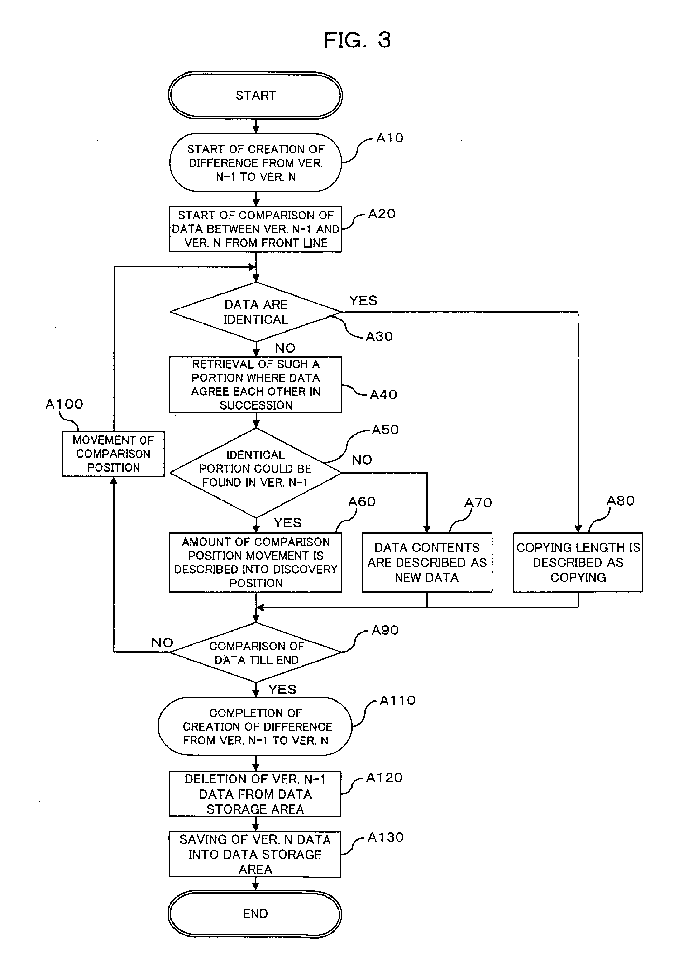

Referring now to a flowchart (steps A10 to A130) shown in FIG. 3, a method for generation of a difference data by the first difference data generation unit 11a in the data management system 1a as the first embodiment of the present invention will be described.

In order to generate a difference data (from Ver. N-1 to Ver. N) for version upgrade (revision) from a data (Ver. N-1) stored in the data storage unit 20 to a latest version (Ver. N) entered by the latest version data entry unit 10 (Step A10), these Ver. N-1 data and Ver. N data are compared sequentially from their front line for every command length (Step A20).

First, whether or not data of the both at a comparison position are identical (Step A30) and if data are identical (see YES route of Step A30), a length of position where data continue to coincide each other (copying length) is acquired and a difference code "copying" showing copying and its "copying length" are described in a difference data (from Ver. N-1 to Ver. N). (Step A80)

When data are not identical (see NO route of Step A30), such a portion where data coincides consecutively in Ver. N-1 data and Ver. N data is searched (Step A40) and whether or not a portion where Ver. N-1 data coincides consecutively is found as a result of the searching (Step A50). When a portion consecutively coincides is found (see YES route of Step A50), "Copying", and "Movement amount" as a difference between detection position and comparison position are described in the difference data (from Ver. N-1 to Ver. N) together with a difference code showing movement (Step A60).

When a portion consecutively coincides is not found in N-1 data (see NO route of Step A50), a difference code showing new is described in the difference data (from Ver. N-1 to Ver. N) together with "New data length" while a value of comparison position is considered as "New" data. (Step A70)

Then, the first difference data generation unit 11a checks whether or not comparison is made till the end of Ver. N-1 data and of Ver. N data (Step A90) and when comparison is not made till the end (See NO route of Step A90), comparison position is moved by one command length (Step A100) and then it returns to Step A30. When comparison is made till the end (see YES route of Step A90), creation of a difference data (from Ver. N-1 to Ver. N) is completed (Step A110).

Further, the new/old data replacement unit 16 replaces a data stored in the data storage unit 20a with a data of latest version (Ver. N) entered from the latest version data entry unit 10 by deleting Ver. N-1 data from the data storage unit 20a (Step A120) and by storing Ver. N data to the data storage unit 20a (saving) (Step A130).

The second difference data generation unit 12 creates a difference data (from Ver. X to Ver. N) which can be revised, based on a difference data (from Ver. X to Ver. N-1) which executes revision from Ver. X data to Ver. N-1 data stored in the difference data storage unit 18 and on a difference data (from Ver. N-1 to Ver. N) generated by the first difference data generation unit 11a, from each of versions (Ver. X) older than a data (Ver. N-1) stored in the data storage unit 20a to a latest version data (Ver. N).

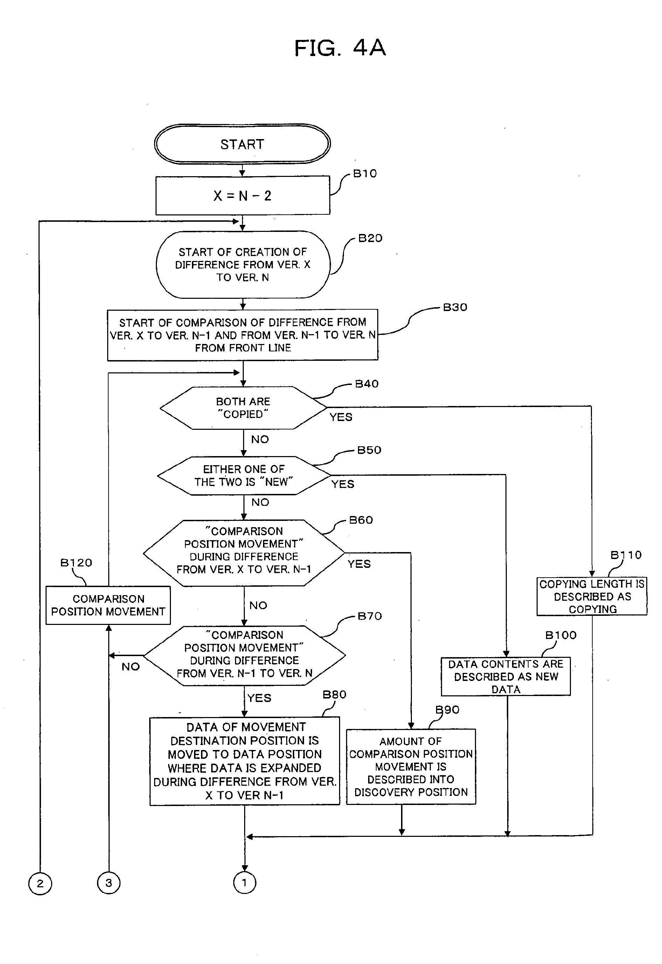

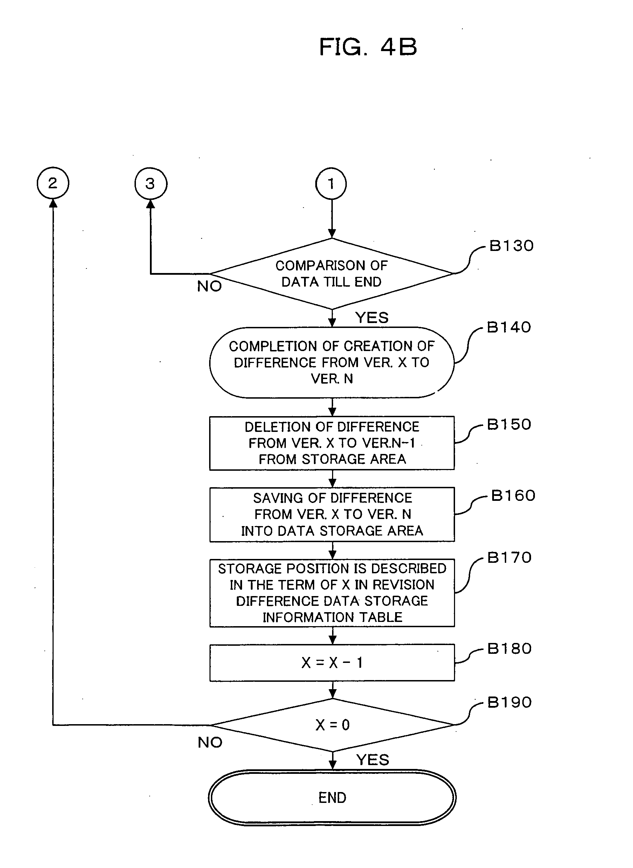

A method for generation of a difference data by the second difference data generation unit 12 in the data management system 1a as the first embodiment of the present invention is described hereinafter referring to a flowchart (Steps B10 to B190) shown in FIGS. 4A and 4B. Incidentally, for convenience reason, one flowchart constituting Steps B10 to B190 is shown in the flowchart (Steps B10 to B120) shown in FIG.4A and the flowchart (Steps B130 to B190) shown in FIG. 4B.

First, the second difference data generation unit 12 starts generation of a difference data (from Ver. X to Ver. N) (Step B20) by setting N-2 to parameter X (Step B10).

The second difference data generation unit 12 acquires each of difference data (from Ver. X to Ver. N-1) stored in the difference data storage unit 18 and a difference data (from Ver. N-1 to Ver. N) generated by the first difference data generation unit 11a, respectively, and starts comparison in order from the front line of these difference data (Step B30).

First, whether or not a difference code of the both at comparison position is "Copying" (Step B40) is checked and when both are copying (see YES route of Step B40), a balance of copying lengths of the both is calculated, and then a difference code showing copying as "Copying" and calculated copying length are described in the difference data (from Ver. X to Ver. N) (Step B110).

Following this, the second difference data generation unit 12 checks whether or not comparison of difference data themselves is performed till the end (Step B130), and when comparison is not performed till the end (see NO route of Step B130), comparison position is moved (Step B120) and then it returns to Step B40.

When both are not "Copying", i.e., either each of difference data (from Ver. X to Ver. N-1) or difference data (from Ver. N-1 to Ver. N) or both are other than "Copying" at comparison position (see NO route of Step B40), then it is checked whether or not either of them is of "New" (Step B50).

When either each of difference data (from Ver. X to Ver. N-1) or difference data (from Ver. N-1 to Ver. N) or both are "New" at comparison position (see YES route of Step B50), a value of comparison position in the difference data (from Ver. N-1 to Ver. N) is described as "New" data in the difference data (from Ver. X to Ver. N) (Step B100) and it proceeds to Step B130.

When either each of difference data (from Ver. X to Ver. N-1) or difference data (from Ver. N-1 to Ver. N) or both are not "New" (see NO route of Step B50), the second difference data generation unit 12 then checks whether or not a data at comparison position in the difference data (from Ver. X to Ver. N-1) is "Movement (movement of reference pointer" (Step B60).

When a data at comparison position in the difference data (from Ver. X to Ver. N-1) is "Movement" (see YES route of Step B60), movement amount in Step B60 is obtained and at the same time, a difference code showing copying and calculated movement amount are described in the difference data (from Ver. X to Ver. N) (Step B90), and then it proceeds to Step B130. In a case "Movement" is continued on this occasion, movement amount of a balance is calculated.

Further, when a data of comparison position in the difference data (from Ver. X to Ver. N-1) is not "Movement" (see NO route of Step B60), the second difference data generation unit 12 then checks whether or not a data of comparison position in the difference data (from Ver. N-1 to Ver. N) is "Movement" (Step B70).

When a data of comparison position in the difference data (from Ver. N-1 to Ver. N) is "Movement" (see YES route of Step B70), comparison position is moved (Step B80) by one command length to the difference data position for expansion of a data in Ver. N-1 being designated as a movement destination in the difference data (from Ver. X to Ver. N-1) and it proceeds to (Step B130).

When comparison of difference data themselves is performed till the end (See YES route of Step B130), creation of the difference data (from Ver. X to Ver. N) is completed (Step B140).

Further, the new/old difference data replacement unit 19 deletes from the difference data storage unit 18 the difference data (from Ver. X to Ver. N-1) (Step B150) and at the same time stores (saving) to the difference data storage unit 18 the difference data (from Ver. X to Ver. N) (Step B160) and describes storage position of the difference data (from Ver. X to Ver. N) to an item corresponding to the Ver. X in the difference data storage information table 21a (Step B170).

The second difference data generation unit 12 decrements X-value (X = X-1) (Step B180) and then checks whether or not X = 0 (Step B190) and when X = 0 (see YES route of Step B190), completes the processing. If X is not 0 (see NO route of Step B190), it returns to Step B20.

The version acquisition unit 14 is for acquiring present version of revision target data in the revision target apparatus (information processing apparatus) 3 for data revision. For example, the version acquisition unit 14 may send a command for checking data version to the information processing apparatus 3 via a communication means and may judge or acquire the version based on the reply from the information processing apparatus 3, or alternatively, may include a version management table (not shown) and may acquire the data version of the information processing apparatus through registration and management of the information processing apparatus 3 and data version thereof being linked with said version management table.

The selection unit 13 is for selecting one difference data from a plurality of difference data stored in the difference data storage unit 18 according to a version of a data stored in the information processing apparatus 3. The selection unit 13 is designed to refer to the difference data storage information table 21a based on a version of a data of the information processing apparatus 3 acquired by the version acquisition unit 14, to acquire storage position of a difference data for revising the version to a latest version thereby acquiring from this storage position a difference data.

The difference data transmission unit (presentation unit) 15 is for presenting a difference data selected by the selection unit 13 to the renewal target apparatus (information processing apparatus) 3, and this can be realized by a data transfer function for transmitting (sending) a data to the information processing apparatus3 via various communication method (protocol), for example, LAN (Local Area Network), wireless LAN, USB, Bluetooth or the like.

The unnecessary difference deletion unit (difference data deletion unit) 17 is for selectively deleting, from a plurality of difference data stored in the difference data storage unit 18, a difference data corresponding to a particular version. For example, when there is a data of a version which has no possibility of being stored (incorporated) in the information processing apparatus 3, the unnecessary difference deletion unit 17 is designed to selectively delete, of the difference data stored in the difference data storage unit 18, a difference data corresponding to the version according to, for example, instruction or the like of a system administrator.

Further, when the unnecessary difference deletion unit 17 deleted a particular difference data from the difference data storage unit 18, storage position of the difference data in the difference data storage information table 21a is also designed to be deleted.

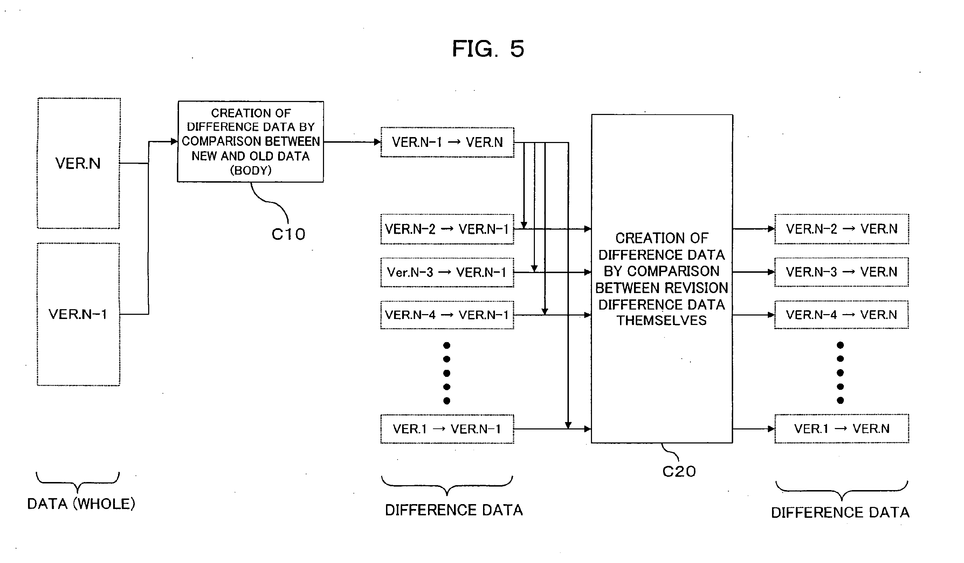

For a case where a latest version data (Ver. N) is generated in the data management system 1a as the first embodiment of the present invention constituted as mentioned above, a method for difference data registration for a data of the latest version will be described hereinafter referring to FIG. 5.

In a case where a latest version data (Ver. N) is generated, the data is entered by the latest version entry unit 10, and the first difference data generation unit 11a generates a difference data (from Ver. N-1 to Ver. N) for revising the version (Ver. N-1) which was latest in the data management server 2a, stored in the data storage unit 20a, to a newly generated version (Ver. N) (Step C10 in FIG. 5).

In addition, the data (Ver. N-1) stored in the data storage unit 20a is replaced with the latest version data (Ver. N) entered from the latest version entry unit 10 by the new/old data management server 2a replacement unit 16, and the difference data (From Ver. N-1 to Ver. N) generated by the first difference data generation unit 11a is stored into the difference data storage unit 18 by the new/old difference data replacement unit 19. Further, accompanied by these processing, revision processing of the difference data storage information table 21a is carried out.

Next, the second difference data generation unit 12 generates, based on the difference data (from Ver. N-1 to Ver. N) generated by the first difference data generation unit 12 and each of difference data stored in the difference data storage unit 18, a difference data (from Ver. X to Ver. N) for revising from each of versions to a latest version (see Step C20 in FIG. 5).

Each of difference data (from Ver. X to Ver. N-1) till Ver. N-1 registered in the difference data storage unit 18 is replaced with each of difference data (from Ver. X to Ver. N) generated by the second difference data generation unit 12 by the new/old difference data replacement unit 19. On this occasion, revision processing of the difference data storage information table 21a is performed together.

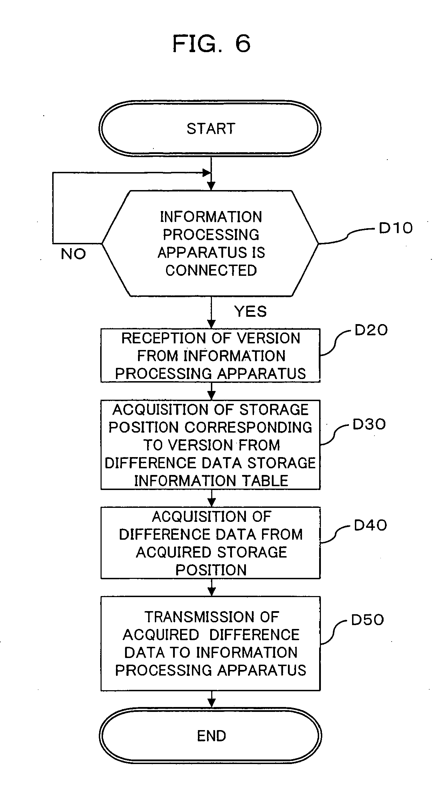

Next, a method for revision of a data of the information processing apparatus 3 in the data management system 1a as the first embodiment of the present invention will be described referring to a flowchart (Step D10 to D50) shown in FIG. 6.

The data management server 2a (version acquisition unit 14) checks whether or not the information processing apparatus 3 of a renewal target apparatus is communicably connected (Step D10) and when the information processing apparatus 3 is not connected(see NO route of Step D10), waits for connection of the information processing apparatus.

When the information processing apparatus 3 is being connected (see YES route of Step D10), the version acquisition unit 14 acquires the version of the data of the information processing apparatus 3 (Step D20). The selection unit 13 acquires storage position of a difference data corresponding to the version of the data of the information processing apparatus 3 acquired by the version acquisition unit 14 by referring to the difference data storage information table 21a (Step D30).

Next, the selection unit 13 acquires the target difference data, based on the acquired storage position, from storage position of the difference data in the difference data storage unit 18 (Step D40).

The difference data transmission unit 15 sends the difference data acquired by the selection unit 13 to the information processing apparatus 3 (Step D50). In the information processing apparatus 3, the data of the old version are revised to the data of the latest version by applying the difference data to the data.

As mentioned above, with the data management system 1a as the first embodiment of the present invention, a plurality of difference data which can be revised from each of version older than a latest version to a latest version data are stored in the difference data storage unit 18, the selection unit 13 selects one difference data from a plurality of said difference data stored in the difference data storage unit 18 according to a version of a data stored in the information processing apparatus 3, and the difference data transmission unit 15 presents the selected difference data to the information processing apparatus 3 and therefore, when a data of any version is used in the information processing apparatus 3, revision from present version to latest version (version upgrade) can be done by the difference data acquired from the data management server 2a, if receiving of a difference data and revision processing using this difference data are made once, and thus a time required for data revision is shortened thereby enhancing the convenience.

In the data management server 2a, only one data (whole) of the latest version in the data management server 2a is stored in the data storage unit 20a, and a difference data, which can be revised from each of versions older than the data stored in the data storage unit 20a to the same version of the data stored in the data storage unit 20a, is stored in the difference data storage unit 18, a capacity of a memory area required for storage of these data and the difference data can be reduced and manufacturing cost of the system can be reduced.

Further, even when a latest version data is newly generated, by simply entering the data of the latest version from the latest version entry unit 10, the new/old data replacement unit 16 and the first difference data generation unit 11a, the second difference data generation unit 12, and the new/old difference data replacement unit 19 automatically execute data registration to the data storage unit 20a and generation and replacement of necessary difference data, and therefore, man-hours of a system administrator can be reduced thereby enhancing the convenience.

Furthermore, when a latest version data is newly registered, the new/old difference data replacement unit 19 replaces the difference data to the old version stored in the difference data storage unit 18 with the difference data generated by the first difference data generation unit 11a and the second difference data generation unit 12, and therefore, a difference data which can surely be revised to a latest version data is registered to the difference data storage unit 18 thereby enhancing reliability of a system.

Likewise, when a latest version data is newly registered, an old version data stored in the data storage unit 20a is replaced with a latest version data entered from the latest version entry unit 10 by the new/old data replacement unit 16 and therefore, a latest version data is surely registered to the data storage unit 20a thereby enhancing reliability of a system.

Moreover, for example, when there is a data of a version which has no possibility of being stored (incorporated) in the information processing apparatus 3, the unnecessary difference deletion unit (difference data deletion unit) 17 selectively deletes a difference data corresponding to the version from a plurality of difference data stored in the difference data storage unit 18 and therefore, a capacity of the difference data storage unit 18 can be saved and this is economical.

Further, the second difference data generation unit 12 creates a difference data which can be revised, based on a difference data generated by the first difference data generation unit 11a and a difference data stored in the difference data storage unit 18, from each of versions older than the data stored in the data storage unit 20a to a latest version data, and therefore, a difference data to a latest version can be generated in a short time thereby enhancing the convenience. Besides, it is also possible to restore the data storage area 18 to latest state in a short period of time.

In addition, the difference data storage information table 21a manages storage position of each of difference data stored in the difference data storage unit 18, the selection unit 13 acquires storage position of the difference data corresponding to a particular version by referring to the difference data storage information table 21a, and therefore, necessary difference data can be obtained easily and at high speed thereby enhancing convenience.

### (B) Explanation of first modification of first embodiment

In the data management system 1a as the first embodiment mentioned above, the second difference data generation unit 12 creates by the method shown in the flowchart in FIG. 4, a difference data which can be revised, based on a difference data (from Ver. X to Ver. N) which executes data revision from Ver. X stored in the difference data storage unit 18 to Ver. N-1 (from Ver. X to Ver. N-1) and a difference data generated by the first difference data generation unit 11a (from Ver. N-1 to Ver. N), from each of versions (Ver. X) older than the data (Ver. N-1) stored in the data storage unit 20a to latest version (Ver. N) data, while the method for generating such a difference data (from Ver. X to Ver. N) is not limited to the method shown in the aforementioned flowchart in FIG. 4 and various modifications may be made without departing from the spirit and scope of the present invention.

A data management system 1a' as a first modification of the data management system 1a of the first embodiment of the present invention (see FIG. 1) is constituted to have a data management server 2a' instead of the data management server 2a of the data management system 1a of the first embodiment. This data management server 2a' has a similar or nearly similar composition to the data management server 2a of the first embodiment except in that a second difference data generation unit 12' is provided instead of the second difference data generation unit 12 of the first embodiment. In addition, this data management server 2a' is also realized by a computer system equipped with, for example, server function.

The second difference data generation unit 12' in the first embodiment, with a similar manner as the second difference data generation unit 12 of the first embodiment, also creates a difference data (from Ver. X to Ver. N) which can be revised, based on the difference data (from Ver. X to Ver. N-1) which executes data revision from Ver. X stored in the difference data storage unit 18 to Ver. N-1 (from Ver. X to Ver. N-1) and a difference data generated by the first difference data generation unit 11a (from Ver. N-1 to Ver. N), from each of versions (Ver. X) older than the data (Ver. N-1) stored in the data storage unit 20a to latest version (Ver. N) data, and creates the difference data (from Ver. X to Ver. N) using a dummy data of the data of each of versions (Ver. X, N-1 and N).

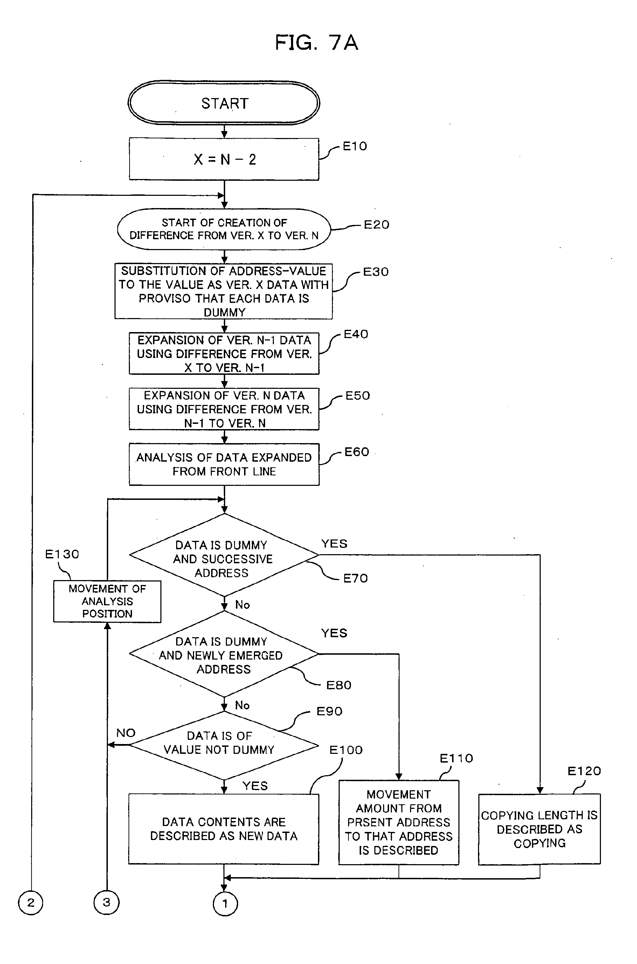

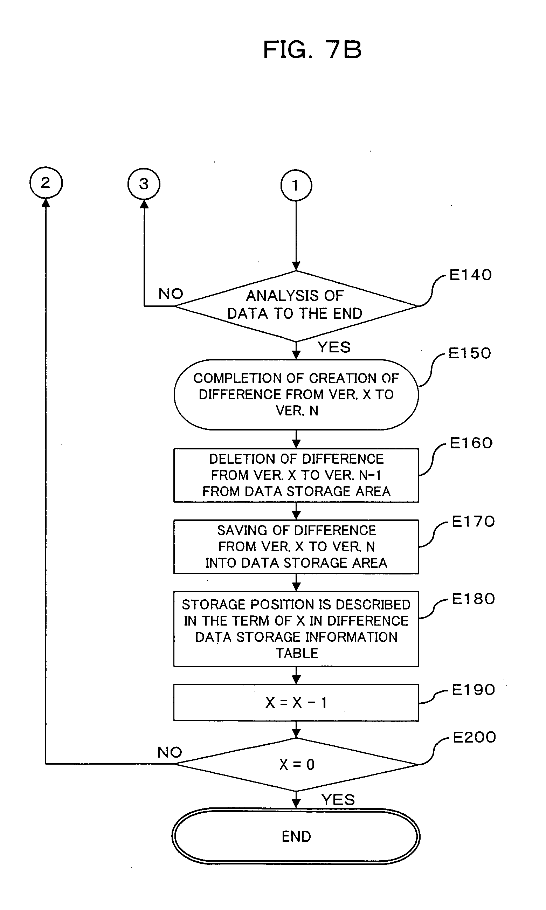

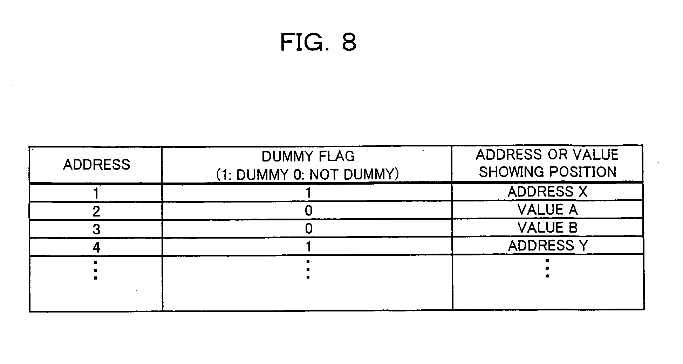

A method for generation of a difference data (from Ver. X to Ver. N) by the second difference data generation unit 12' in the data management system 1a' as the first modification of the first embodiment of the present invention is described hereinafter according to the flowchart (Steps E10 to E200) shown in FIG. 7A and FIG. 7B referring to FIG. 8. Note that in the flowchart (Steps E10 to E130) shown in FIG. 7A and the flowchart (Steps E140 to E200) shown in FIG. 7B is shown one flowchart constituting of steps E10 to E200 being divided for convenience reason. Further, FIG. 8 is a drawing showing a dummy data (dummy data X) used in the first modification.

Incidentally, in the first modification, with a similar manner to the first embodiment, an arbitrary version of a data is indicated by parameter X (where, 1 ≤ X ≤ N-2), and reference numerals identical with previously-mentioned reference numerals in this description show identical or nearly identical portion and therefore, descriptions thereof are omitted.

First, the second difference data generation unit 12' starts generation of a difference data (from Ver. X to Ver. N) (Step E20) by setting N-2 to parameter X (Step E10).

The second difference data generation unit 12', having converted all data values into dummy, generates "Dummy data X" which is a dummy data of Ver. X data and into which is substituted address value showing a position of the data (Step E30).

As shown in FIG. 8, this dummy data X shows Ver. X data in arrayed fashion and is constituted, for example, by linking an address and dummy flag, and an address showing a value or position. In this dummy data X, it is designed to be possible to make judgment if a substituted value is "Address showing position" or "Actual value" by referring to a dummy flag of the address. Incidentally, for methods of generation and use of such dummy data, various methods adopted normally in programming may be used and, for example, a dummy data may be in a form of external list.

The second difference data generation unit 12' generates a dummy data (Dummy data N-1) of Ver. N-1 and expands it on memory space (not shown) (Step E40), by applying each of difference data (from Ver. X to Ver. N-1) stored in the difference data storage unit 18 to dummy data-X generated in step E30.

Further, the second difference data generation unit 12' generates a dummy data (Dummy data N) of Ver. N and expands it on memory space (not shown) (Step E50), by applying the difference data (from Ver. N-1 to Ver. N) generated by the first difference data generation unit 11a to dummy data N-1 generated in step E40.

Then the second difference data generation unit 12' analyzes Dummy data N being expanded in step E50 in order from the front line thereof (Step E60). Incidentally, a position where analysis in Dummy data N is executed is referred to as analysis position.

First, judgment is made whether or not a difference code at analysis position is dummy and whether or not the substituted address is continued from the substituted address at previous analysis position (Step E70), and when the difference code is dummy and the address is continuous (see YES route of Step E70), a copying length, which is a length till continuity of the address is interrupted, is obtained and then a difference code showing copying as "Copying" and copying length thus obtained are described in the difference data (from Ver. X to Ver. N) (Step E120) .

Then the second difference data generation unit 12 checks whether or not analysis of dummy data N is carried out till the end (Step E140) and when comparison has not been carried out till the end (see NO route of Step E140), moves comparison position (Step E130) and then returns to Step B70.

Further, when the substituted address is not continuous form the substituted address at previous analysis position (see NO route of Step E70), checking is then made to see whether or not a data at analysis position is dummy and a substituted address is different from the substituted address at previous analysis position or the data at previous analysis position is not dummy (Step E80) . When a data at analysis position is dummy and a substituted address is different from the substituted address at previous analysis position (newly emerged), or the data at previous analysis position is dummy (see YES route of Step E80), movement amount from analysis target address to the address substituted in step E80 is obtained and a difference code showing movement as "Movement" and movement amount thus obtained are described in the difference data (from Ver. X to Ver. N) (Step E110), and it proceeds to step E140.

Next, judgment is made whether or not a data at analysis position is not dummy (Step E90) and when it is not dummy (see NO route of Step E90), it proceeds to step E130. When it is dummy (see YES route of Step E90), a data at analysis position is described in the difference data (from Ver. X to Ver. N) as "New" data (step E100), and it proceeds to step E140.

Further, when analysis of dummy data N has been carried out till the end (see YES route of Step E140), creation of the difference data (from Ver. X to Ver. N) is completed (Step E150).

Further, the new/old difference data replacement unit 19 deletes from the difference data storage unit 18 the difference data (from Ver. X to Ver. N-1) (Step E160), stores (saving) to the difference data storage unit 18 the difference data (form Ver. X to Ver. N) generated as mentioned above (Step E170), and describes to an item corresponding to the Ver. X in the difference data storage information table 21a the storage position of difference data (from Ver. X to Ver. N) (Step E180).

The second difference data generation unit 12' decrements X-value (X = X-1) (Step E190) and then checks whether or not X = 0 (Step E200) and when X = 0 (see YES route of Step E200), completes the processing. If X is not 0 (see NO route of Step E200), it returns to Step E20.

In the data management system 1a' (data management server 2a') as the first modification of the first embodiment of the present invention, a difference data (from Ver. X to Ver. N) can be generated, and similar operational effects as attained by the first embodiment can be obtained.

### (C) Explanation of second modification of first embodiment

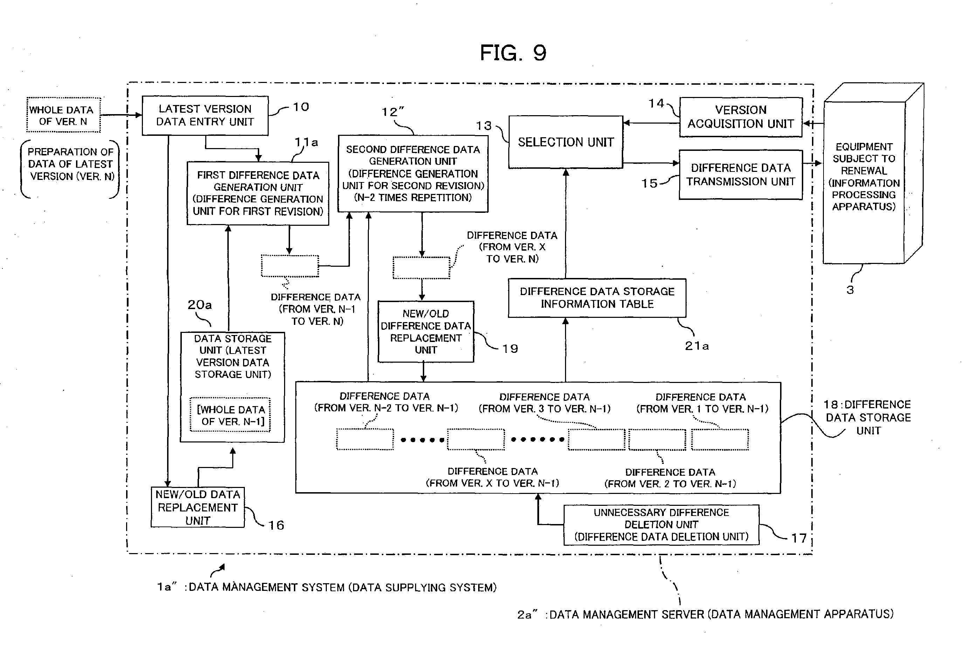

FIG. 9 is a drawing showing schematically a composition of the data management system 1a" as a second modification of the data management system 1a of the first embodiment of the present invention.

The data management system 1a" of the second modification is, as shown in FIG. 9, constituted so as to have a data management server 2a" instead of the data management server 2a in the data management system 1a of the first embodiment. This data management server 2a" has a similar or nearly similar composition to the data management server 2a (see FIG. 1) of the first embodiment and the data management server 2a' (see FIG. 1) which is a modification thereof except in that a second difference data generation unit 12" is provided instead of the second difference data generation unit 12 of the first embodiment. Besides, this data management server 2a" is also realized by a computer system, for example, equipped with server function.

The second difference data generation unit 12" (second difference data generation unit) in the second modification is for generating a difference data (from Ver. X to Ver. N) based on the difference data (from Ver. X to Ver. N-1) stored in the difference data storage unit 18, the difference data (from Ver. N-1 to Ver. N) generated by the first difference data generation unit (first difference data generation unit) 11a, and the latest version (Ver. N) data entered by the latest version entry unit 10.

Note that in the second modification, with a similar manner to the first embodiment, an arbitrary version of a data is indicated by parameter X (where, 1 ≤ X ≤ N-2), and reference numerals identical with previously-mentioned reference numerals in this description show identical or nearly identical portion and therefore, descriptions thereof are omitted.

The second difference data generation unit 12" is designed to generate a difference data (from Ver. X to Ver. N) according to the following procedures (1) to (3): In this modification, a first dummy empty data in which nothing is written (blank data) (empty data of Ver. N-1) and a second dummy empty data (empty data of Ver. X) are used (to be prepared in advance).
(1) Based on the first dummy empty data (empty data of Ver. N-1), the latest version (Ver. N) data entered by the latest version data entry unit 10, and the difference data (from Ver. N-1 to Ver. N) generated by said first difference data generation unit 11a, the difference data (from Ver. N-1 to Ver. N) generated by the first difference data generation unit 11a is analyzed and a part of Ver. N data is copied to Ver. N-1 empty data, and a dummy data is set to an area other than said copied data in the dummy empty data to generate a dummy data B' of Ver. N-1 (a first dummy data).
(2) Based on the second dummy empty data (empty data of Ver. X), said dummy data B', and the difference data (from Ver. X to Ver. N-1) stored in the second difference data storage unit 182, the difference data (from Ver. X to Ver. N-1) stored in the second difference data storage unit 182 is analyzed and a part of dummy data B' is copied to Ver. X empty data, and a dummy data is set to an area other than said copied data in the dummy empty data to generate a dummy data A' of Ver. X (a second dummy data).
(3) By comparison between aforementioned dummy data A' and the latest version (Ver. N) data entered by the latest version data entry unit 10, a difference data which can be revised from each of versions older than the data stored in the data storage unit 20a to latest version (Ver. N) data is created (from Ver. X to Ver. N).

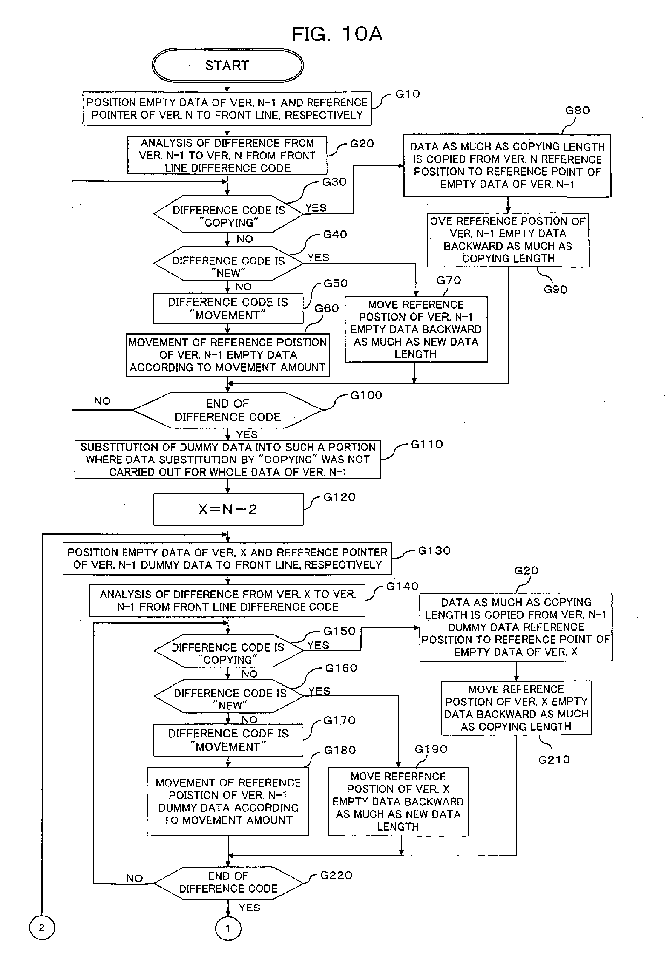

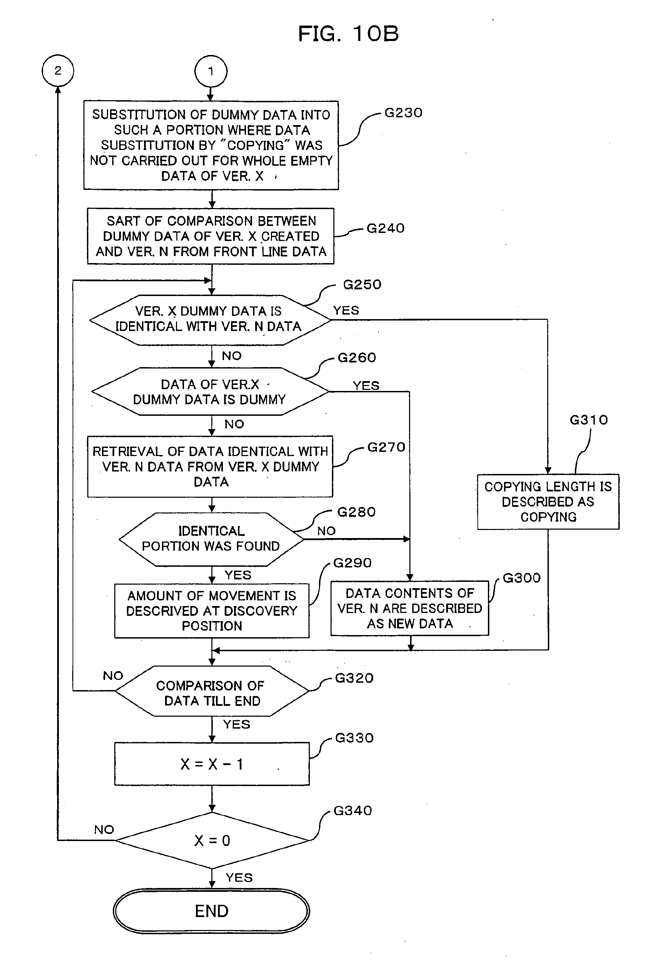

A method for generation of the difference data (from Ver. X to Ver. N) by the second difference data generation unit 12" in the data management system 1a" as the second modification of the first embodiment of the present invention will be described according to a flowchart (Steps G10 to G340) shown in FIG. 10A and FIG. 10B. Incidentally, in the flowchart (Steps G10 to G220) shown in FIG. 10A and the flowchart (Steps G230 to G340) shown in FIG. 10B is shown one flowchart constituting of Steps G10 to G340 being divided for convenience reason.

First, the second difference data generation unit 12" expands an empty data of Ver. N-1 and a data of latest version (Ver. N) entered from the latest version data entry unit 20 on a memory (for example, high-speed memory 23 for data expansion) and sets a reference pointer at front line of each of data (Step G10).
Next, the second difference data generation unit 12" analyzes the difference data (from Ver. N-1 to Ver. N) generated by the first difference data generation unit 11a from front line difference code in order (Step G20).

First, judgment is made whether or not the difference code is "Copying" (Step G30) and when it is copying (see YES route of Step G30), a data as long as copying length is copied from reference position of Ver. N to reference position of empty data of Ver. N-1 (Step G80), and reference position in empty data of Ver. N-1 is moved backward as long as copying length (Step G90).

Then, judgment is made whether or not analysis has been made for all difference codes of the difference data (from Ver. N-1 to Ver. N), i.e., judged whether or not it is end of the difference code (Step G100), and when it is not the end (see NO route of Step G100), it returns to step G30.

When the difference code is not copying (see NO route of Step G30), the second difference data generation unit 12" then judges whether or not the difference code is "New" (Step G40). When the difference code is new (see YES route of Step G40), reference position in empty data of Ver. N-1 is moved backward as long as new data length (Step G70), and it proceeds to step G100.

Further, when the difference code is not new (see NO route of Step G40), the second difference data generation unit 12" then judges that the difference code is "Movement" (Step G50), moves backward the reference position in empty data of Ver. N-1 based on movement amount (Step G60), and proceeds to Step G100.

When the difference code is the end (see YES route of Step G100), a dummy data (dummy portion) is substituted to a portion where data substitution by copying is not performed in the empty data of Ver. N-1 to complete dummy data (dummy data B') of Ver. N-1 (Step G110).

Next, the second difference data generation unit 12" sets X = N-2 (Step G120) and then expands a dummy data of Ver. N-1 (dummy data B') generated in step G110 and an empty data of Ver. X on a memory (for example, high-speed memory 23 for data expansion) and sets a reference pointer at front line of each of data (Step G130).

Next, the second difference data generation unit 12" analyzes the difference data (from Ver. X to Ver. N-1) acquired from the difference data storage unit 18 from front line difference code in order (Step G140).

First, judgment is made whether or not the difference code is "Copying" (Step G150) and when it is copying (see YES route of Step G150), a data as long as copying length is copied from reference position of Ver. N-1 to reference position of empty data of Ver. X (Step G200), and reference position in empty data of Ver. X is moved backward as long as copying length (Step G210).

Then judgment is made whether or not analysis has been made for all difference codes of the difference data (from Ver. X to Ver. N-1), i.e., judged whether or not it is end of the difference code (Step G220), and when it is not the end (see NO route of Step G220), it returns to step G150.

When the difference code is not copying (see NO route of Step G150), the second difference data generation unit 12" then judges whether or not the difference code is "New" (Step G160). When the difference code is new (see YES route of Step G160), reference position of empty data of Ver. X is moved backward as long as new data length (Step G190), and it proceeds to step G220.

Further, when the difference code is not new (see NO route of Step G160), the second difference data generation unit 12" judges that the difference code is "Movement" (Step G170), moves the reference position in empty data of Ver. X based on the movement amount (Step G180) and proceeds to Step G220.

When the difference code is the end (see YES route of Step G220), a dummy data of Ver. X (dummy data A') is completed (Step G230) by substituting a dummy data (dummy portion) to such a portion where data substitution by copying is not carried out, in empty data of Ver. X.

Next, the second difference data generation unit 12" compares the dummy data of Ver. X (dummy data A') generated in step G230 and the data of latest version (Ver. N) entered from the latest version data entry unit 20 from the front line data (step G240).

Judgment whether or not the dummy data of Ver. X and Ver. N data are identical (Step G250) is made, and when they are identical (see YES route of Step G250), a copying length is described to the difference data (from Ver. X to Ver. N) as copying (Step G310). Then judgment whether or not comparison is made till the end is made (Step G320), and when comparison is not made till the end (see NO route of Step 320), it returns to step G250.

When the dummy data of Ver. X and Ver. N data are not identical (see NO route of Step G250), the second difference data generation unit 12" then judges whether or not a data at comparison position in the dummy data of Ver. X is a dummy data (Step G260). When it is a dummy data (see YES route of Step G260), contents of Ver. N data are described in the difference data (from Ver. N-1 to Ver. N) as a new data (Step G300), and proceeds to step G320.

Further, when a data at the comparison position in the dummy data of Ver. X is not a dummy data (see NO route of Step G260), data identical with Ver. N data are retrieved in the dummy data of Ver. X (Step G270), and judgment is made whether or not an identical portion is detected (Step G280).

When an identical portion is not detected (see NO route of Step G280), it proceeds to step G300. When an identical portion is detected (see YES route of Step G280), movement amount till detection position is described in the difference data (from Ver. X to Ver. N) (Step G290), and proceeds to step G320.

When the data comparison has been made till the end (see YES route of Step G320), X-value is decremented (X = X-1) (Step G330) and judgment whether or not X = 0 is made (Step G340). When X is not 0 (see NO route of Step G340), it returns to Step G130, and when X = 0 (see YES route of G340), the processing is completed.

With the data management system 1a" as the second modification of the first embodiment of the present invention constituted as mentioned above, it is also possible to obtain similar operational effects as attained by the aforementioned first embodiment and the first modification thereof.

### (D) Explanation of second embodiment

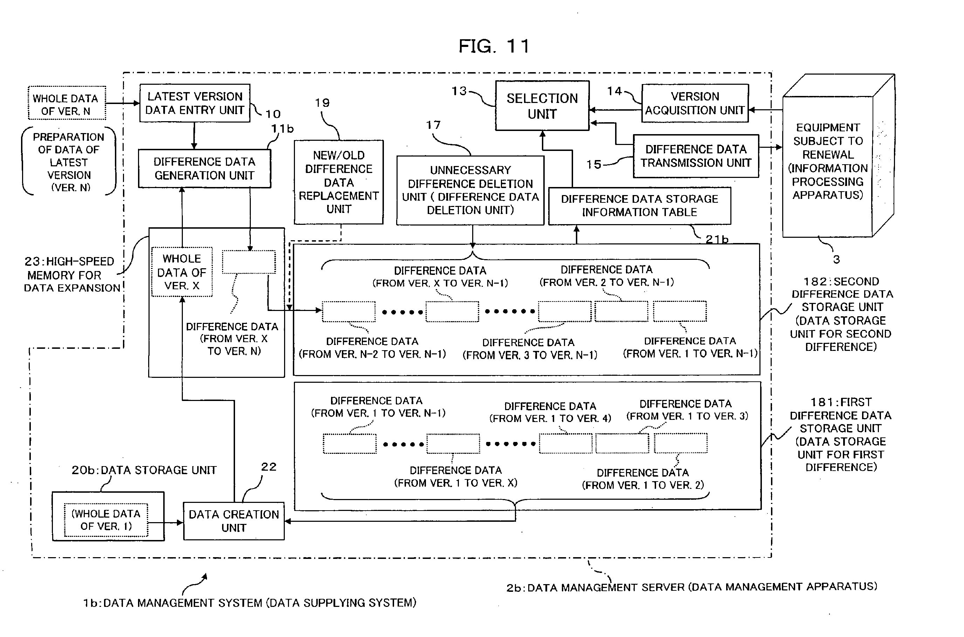

FIG. 11 is a drawing showing schematically a composition of a data management system (data supplying system) 1b as the second embodiment of the present invention.

The data management system 1b of the second embodiment is also, in a similar manner to the data management system 1a of the first embodiment, communicably connected with an information processing apparatus (renewal target apparatus) 3 which is capable of storing data and program (hereinafter referred to simply as data), manages data of a plurality of versions and manages these data in an attempt to present the information processing apparatus 3 the latest version data.

The data management system 1b as the second embodiment of the present invention is, as shown in FIG. 11, constituted so as to have a data management server (data management apparatus) 2b communicably connected with the information processing apparatus 3. Further, this data management server 2b is realized by, for example, a computer system equipped with server function, and is constituted of, as shown in FIG. 11, a latest version data entry unit 10, a difference data generation unit (first difference data generation unit) 11b, a selection unit 13, a version acquisition unit 14, a difference data transmission unit (presentation unit) 15, an unnecessary difference deletion unit (difference data deletion unit) 17, a first difference data storage unit (first difference data storage unit) 181, a second difference data storage unit (second difference data storage unit) 182, a new/old difference data replacement unit 19, a data storage unit 20b, a data creation unit 22, and a difference data storage information table 21b.

In other words, the data management server 2b of the second embodiment is equipped with the difference data generation unit 11b instead of the first difference data generation unit 11 and the second difference data generation unit 12 in the data management server 2a of the first embodiment, and is constituted so as to have the first difference data storage unit 181 and the second difference data storage unit 182 instead of the difference data storage unit 18, the difference data storage information table 21b instead of the difference data storage information table 21a, and the data storage unit 20b instead of the data storage unit 20a.

Further, the data management server 2b is constituted by excluding the new/old data replacement unit 16 in the data management server 2a of the first embodiment, instead is constituted so as to have the data creation unit 22 and the high-speed memory 23 for data expansion.

Incidentally, reference numerals identical with previously-mentioned reference numerals in the drawing show identical or nearly identical portion and therefore, descriptions thereof are omitted.

The data storage unit 20b is for storing whole data of versions older than the latest version (Ver. N) entered from the latest version data entry unit 10, and in the second embodiment, the data (whole) of the oldest version (Ver. 1) are being stored.

The first difference data storage unit 181 (first difference data storage unit) is for storing a plurality of difference data which can revise the data being stored in the data storage unit 20b to the data of each of a plurality of versions (Ver. X) to be managed by the data management system 1b, and is realized by a memory unit, for example, a hard disc, memory or the like in a computer system.

The data creation unit 22 is for creating a data of each of versions based on the data stored in the data storage unit 20b and on each of difference data stored in the first difference data storage unit 181, and is designed to be able to create a data (whole) of an arbitrary version (Ver. X) by applying each of difference data stored in the first difference data storage unit 181 selectively to the data stored in the data storage unit 20b.

The high-speed memory 23 for data expansion is for expanding the data created by the data creation unit 22, and can improve processing speed by use of a memory having especially high access speed.

The difference data generation unit 11b is for generating a difference data (from Ver. X to Ver. N) which can revise a data of each of versions (Ver. X) to a data of the latest version (Ver. N) based on the data of each of versions created by the data creation unit 22 and on the data of the latest version entered from the latest version data entry unit 10. Note that a method for generation of a difference data by the difference data generation unit 11b (from Ver. X to Ver. N) is nearly similar to the creation method (see FIG. 3) for creating the difference data (from Ver. N-1 to Ver. N) by the first difference data generation unit 11a of the first embodiment, and therefore, descriptions thereof are omitted.

The second difference data storage unit (second difference data storage unit) 182 is for storing a difference data generated by the difference data generation unit 11b and designed to store each of difference data which can revise a data of each of versions to the latest version in the data management system 1b. Incidentally, this second difference data storage unit 182 is also realized by a memory unit, for example, a hard disc, memory or the like in a computer system.

The difference data storage information table 21b is a table which manages storage position of each of difference data being stored in the second difference data storage unit 182 and is constituted in such that, with a similar manner to the difference data storage information table 21a (see FIG. 2) of the first embodiment, storage position (storage address) of the difference data corresponding to a version before revision and the current version are registered being linked, and storage position of a difference data corresponding to a particular version can be obtained at high speed if the difference data storage information table 21b is referred to by the selection unit 13.

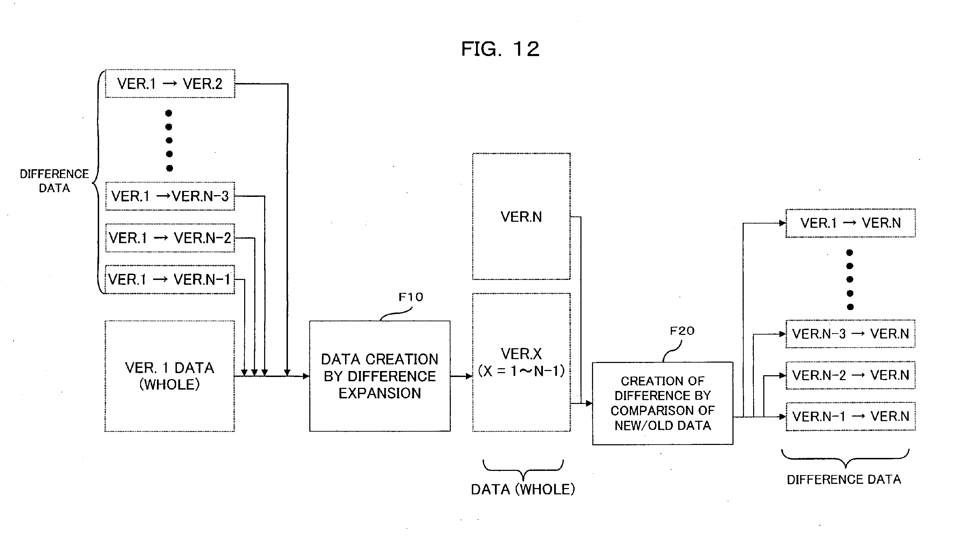

In the data management system 1b as the second embodiment of the present invention constituted as mentioned above, when a data of the latest version (Ver. N) is generated, a method for registration of a difference data for the latest version data will be described using FIG. 12.

When a data of the latest version (Ver. N) is generated, first, the data creation unit 22 creates a data (whole) of each of versions (Ver. X) based on the data (whole) of Ver. 1 stored in the data storage unit 20b and each of difference data stored in the first difference data storage unit 181 (Step F10 in FIG. 12), and expands it on the high-speed memory 23 for data expansion.

Note that although it is preferable for the creation unit 22 to sequentially create and expand a data of each of versions, when, for example, capacity of the high-speed memory 23 for data expansion is sufficiently large compared with the size of each of data, data of a plurality of versions may be created and expanded at one time.

Then, the difference data generation unit 11b generates a difference data (from Ver. X to Ver. N) which can revise Ver. X data to a data of the latest version (Ver. N) based on the data (Ver. N) entered by the latest version data entry unit 10 and the data (Ver. X) expanded on the high-speed memory 23 for data expansion (see step F20 in FIG. 12).

Each of difference data till Ver. N-1 (from Ver. X to Ver. N-1) registered in the difference data storage unit 18 is replaced with the difference data (from Ver. X to Ver. N) generated by the difference data generation unit 11b by the new/old difference data replacement unit 19. On this occasion, revision processing of the difference data storage information table 21a is performed together.

Incidentally, the method for revision of the data of the information processing apparatus 3 in the data management system 1b as the second embodiment of the present invention is nearly similar to the aforementioned data management system 1a (see FIG. 6) of the first embodiment except in that the selection unit 13 acquires the difference data corresponding to the version of the data of the information processing apparatus 3 acquired by the version acquisition unit 14 from the storage position of the difference data in the second difference data storage unit 182, and therefore, detailed description thereof is omitted.

As mentioned, according to the data management system 1b as the second embodiment of the present invention, in addition to that operational effects similar to that of the first embodiment can be obtained, the difference data generation unit 11b generates each of difference data (from Ver. X to Ver. N) based on the whole data of the latest version entered from the latest version data entry unit 10 and on the whole data of each of old versions created by the data creation unit 22, and therefore, compared with a case where a difference data (from Ver. X to Ver. N) is created from difference data themselves (difference data (from Ver. X to Ver. N-1) and difference data (from Ver. N-1 to Ver. N) as is the case of the second difference data generation unit 12 of the first embodiment, capacity of the difference data (from Ver. X to Ver. N) to be generated can be made smaller in some cases.

For example, in a step to revise data over a plurality of versions, when a portion altered in a certain version is restored in a later version, and when the second difference data generation unit 12 generated a difference data (from Ver. X to Ver. N) from difference data themselves as is the case of the first embodiment, the difference data generated (from Ver. X to Ver. N) includes these revision steps as difference codes; while when a difference data (from Ver. X to Ver. N) is generated from the whole data themselves as is the case of the second embodiment, difference codes for such revision steps are not included, and therefore a difference data (from Ver. X to Ver. N) with minimum size can be generated.

### (E) Explanation of modification of second embodiment

In the aforementioned data management system 1b of the second embodiment, although a data of the oldest version (Ver. 1) as the data older than the latest version (Ver. N) entered from the latest version data entry unit 10 is stored in the data storage unit 20b, without being limited to this, a data of other version (Ver. B) older than the latest version (Ver. N) entered from the latest version data entry unit 10 may be stored (where, 1 < B < N).

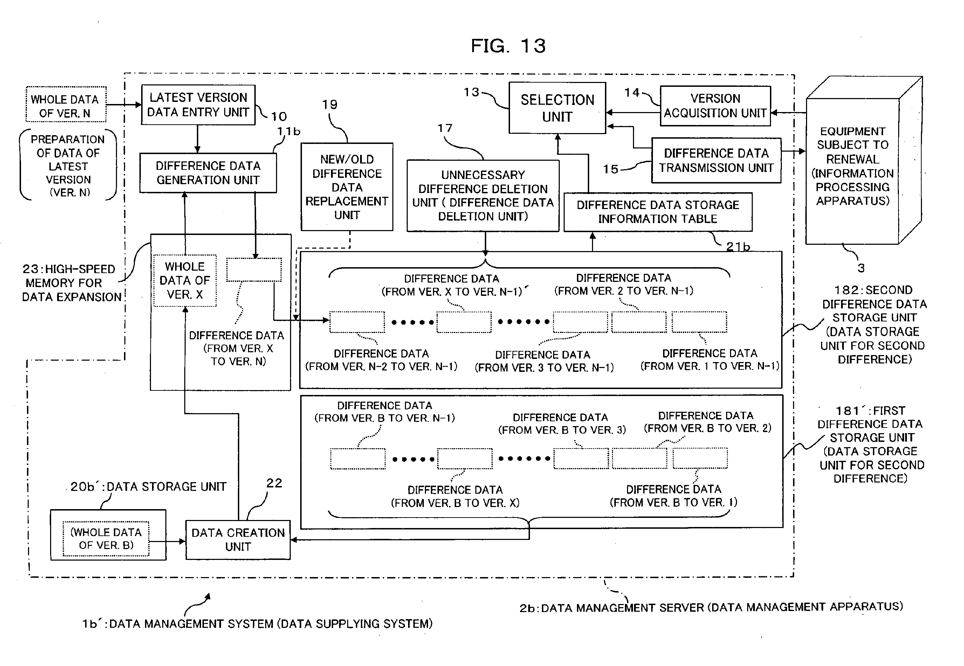

FIG. 13 is a drawing showing schematically a composition of a data management system 1b' as a modification of the second embodiment of the present invention. As shown in FIG. 13, the data management system 1b' according to this modification is equipped with the data storage unit 20b' instead of the data storage unit 20b in the data management system 1b of the second embodiment, and a first difference data storage unit 181' instead of the first difference data storage unit 181. Incidentally, in the drawing, reference numerals identical with previously-mentioned reference numerals in the drawing show identical or nearly identical portion and therefore, detailed descriptions thereof are omitted.

The data storage unit 20b' stores a data of the version (Ver. B) older than the latest version (Ver. N) entered from the latest version data entry unit 10.

Besides, the first difference data storage unit 181' is designed to store each of difference data which can revise the data stored in the data storage unit 20b' to the data of each of a plurality of versions to be managed by the data management system 1b'.

Note that when B > X in the modification, i.e., Ver. B is newer than Ver. X, to the first difference data storage unit 181' is registered a difference data for revision from version Ver. B data which is newer version to Ver. X data which is older (version down)version (from Ver. B to Ver. X).

In the data management system 1b' as a modification of the second embodiment of the present invention, operational effects similar to that of the second embodiment can be obtained.

### (F) Explanation of the third embodiment

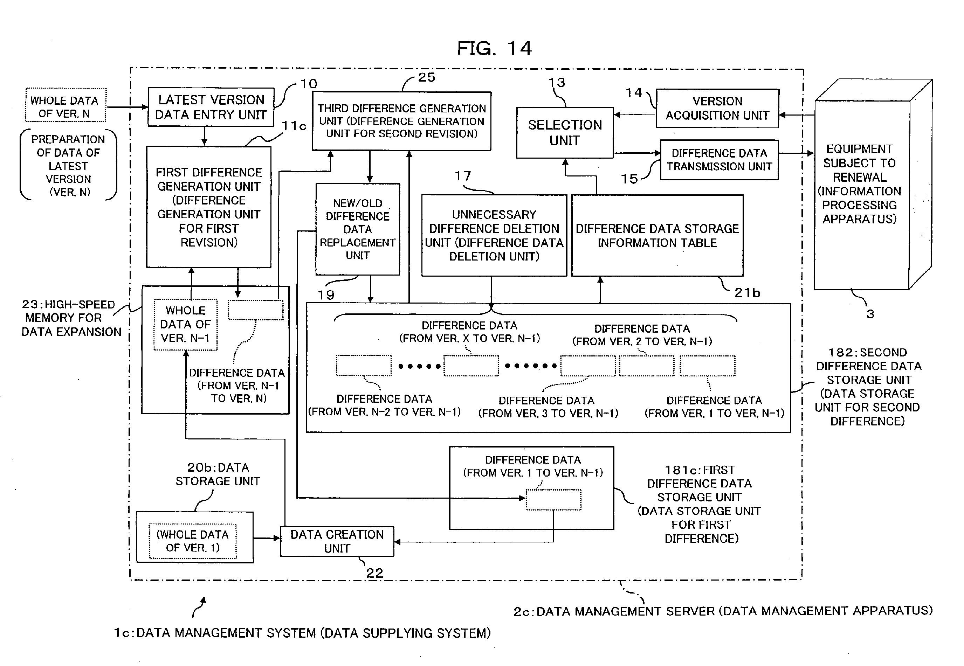

FIG. 14 is a drawing showing schematically a composition of a data management system 1c as the third embodiment of the present invention.

The data management system 1c of the third embodiment is, with a similar manner to the data management system 1b of the second embodiment, communicably connected with the information processing apparatus (renewal target apparatus) 3 capable of storing data and program (hereinafter referred to simply as data), manages data of a plurality of versions, and manages these data in an attempt to present the information processing apparatus 3 a latest version data.

The data management system 1c of the third embodiment of the present invention is constituted, as shown in FIG. 14, so as to have a data management server (data management apparatus) 2c communicably connected with the data processing apparatus 3.

The data management server 2c includes, as shown in FIG. 14, a third difference data generation unit (second difference data generation unit) 25 to the data management server 2b of the second embodiment, includes a first difference data storage unit 181 (first difference data storage unit) c instead of the first difference data storage unit 181, and includes a first difference data generation unit (first difference data generation unit) 11c instead of the difference data generation unit 11b. Incidentally, in the drawing, reference numerals identical with previously-mentioned reference numerals show identical or nearly identical portion and therefore, detailed descriptions thereof are omitted. Besides, this data management server 2c is realized, for example, by a computer system equipped with server function.

The first difference data storage unit 181c is for storing a difference data to revise a data of version stored in the data storage unit 20b to a data of Ver. N-1. Note that in the example shown in FIG.14, since data (whole) of Ver. 1 is stored in the data storage unit 20b, a difference data (from Ver. 1 to Ver. N-1) is stored in a first difference data storage unit 181d.

In a data management system 1d of the third embodiment, a data creation unit 22 is designed to create a data (whole) of Ver. N-1 based on the data of Ver. 1 stored in the data storage unit 20b and on each of difference data (from Ver. 1 to Ver. N-1) stored in the first difference data storage unit 181c, and to expand the created Ver. N-1 data on the high-speed memory 23 for data expansion.

A first difference data generation unit 11c is for generating a difference data (from Ver. N-1 to Ver. N) which can revise a data of Ver. N-1 to a data of the latest version (Ver. N) based on the data of Ver. N-1 created by the data creation unit 22 and on the data of the latest version (Ver. N) entered from the latest version data entry unit 10. Note that a method for generation of the difference data (from Ver. N-1 to Ver. N) by the first difference data generation unit 11c is nearly same as the method for creation of the difference data (from Ver. N-1 to Ver. N) by the first difference data generation unit 11 of the first embodiment mentioned above (see FIG. 3) and therefore, description is omitted.

A third difference data generation unit 25 is for generating a difference data (from Ver. X to Ver. N) based on the difference data (from Ver. N-1 to Ver. N) generated by the first difference data generation unit 11c and on each of difference data stored in the second difference data storage unit 182 (from Ver. X to Ver. N-1).

Further, the third difference data generation unit 25 is designed to deliver the difference data (from Ver. X to Ver. N) generated to the new/old difference data replacement unit 19.

In the data management system 1c of the third embodiment, when the latest data is entered from the latest version data entry unit 10 and a difference data thereof is generated by the third difference data generation unit 25, the new/old difference data replacement unit 19 is designed to execute revision (replacement) of the difference data (from Ver. X to Ver. N-1) stored in the second difference data storage unit 182 and at the same time, to replace the difference data (from Ver. 1 to Ver. N-1) stored in the first difference data storage unit 181c with the difference data to be used for revision of the data stored in the data storage unit 20b to the latest version data entered from the latest version data entry unit 10.

Incidentally, a method for creation of the difference data (from Ver. X to Ver. N) by the third difference data generation unit 25 is nearly similar to the method for creation of the difference data (from Ver. N-1 to Ver. N) (see FIG. 4 and FIG. 7) by the second difference data generation unit 12 of the first embodiment mentioned above, the second difference data generation unit 12' which is a first modification thereof, and the second difference data generation unit 12" which is a second modification, and therefore, description is omitted.

Similar operational effects as attained by the first embodiment can be obtained by the data management system 1c as the third embodiment of the present invention can be obtained.

### (G) Others

In each of embodiments and modifications thereof mentioned above, while CPU (Central Processing Unit) of a computer constituting the data management server 2a, 2a', 2a", 2b, 2c executes a data management program, the latest version data entry unit 10, the first difference data generation unit 11a, the second difference data generation unit 12, 12', 12", the selection unit 13, the version acquisition unit 14, the difference data transmission unit 15, the new/old data replacement unit 16, the unnecessary difference deletion unit 17, the new/old difference data replacement unit 19, the difference data storage information table 21a, the second difference data generation unit 12', the difference data generation unit 11b, 11d, the third difference data generation unit 25, and the difference data storage information table 21b mentioned above do function.

Incidentally, a program (data management program) for realizing functions of these the latest version data entry unit 10, difference data generation unit 11b, 11c, the first difference data generation unit 11a, the second difference data generation unit 12, 12', 12", the selection unit 13, the version acquisition unit 14, the difference data transmission unit 15, the new/old data replacement unit 16, the unnecessary difference deletion unit 17, the new/old difference data replacement unit 19, the difference data storage information table 21a, and the difference data storage information table 21b, is presented in a form being recorded on a computer readable recording media, for example, flexible disc, CD-ROM, CD-R, CD-R/W, DVD, DVD-R, DVD-R/W, magnetic disc, optical disc, magnetic optical disc or the like. The computer reads out the program from its recording media, transfers it to the internal memory unit or external memory unit, and stores it there for use. Alternatively, the program may be stored in a memory unit (recording media), for example, magnetic disc, optical disc, magnetic optical disc or the like, and be presented to the computer from its recording apparatus via a communication route.

Incidentally, the computer referred to in the embodiments is a concept including a hardware and an operating system and denotes the hardware operated under a control of the operating system. Further, in a case where the operating system is unnecessary and the hardware is operated by an application program alone, the hardware itself corresponds to the computer. The hardware includes at least a microprocessor such as CPU and a means for reading out a computer program recorded in the recording media and in this embodiment, the data management server 2a, 2a' , 2a", 2b, 2b', 2c is equipped with a function as the computer.

Further, as the recording media in the embodiment, in addition to aforementioned flexible disc, CD-ROM, CD-R, CD-R/W, DVD, DVD-R, DVD-R/W, magnetic disc, optical disc, magnetic optical disc or the like, various media such as IC card, ROM cartridge, magnetic tape, punch card, internal memory of computer (memory such as RAM and ROM), external memory, printed material on which is recorded barcode or the like, which are computer readable, may be used.

Furthermore, in each of embodiments and modifications thereof shown above, the management server 2a, 2a', 2a", 2b, 2b', 2c, and the information processing apparatus 3 can be communicably connected by various communication methods, regardless of wired or wireless, for example, LAN, USB, wireless LAN, Bluetooth (registered trade name) or the like, while the present invention is particularly effective when such a communication method is used with which a time required for transfer of a data (transfer time) is increased remarkably according to the amount of data transferred between data management server 2a, 2a', 2a", 2b, 2b', 2c such as USB, and the information processing apparatus 3.

The present invention is not limited to aforementioned embodiments and various modifications may be made without departing from the scope and spirit of the present invention.

For example, with each of embodiments mentioned above, the latest version data entry unit 10, the difference data generation unit 11b and 11c, the first difference data generation unit 11a, the second difference data generation unit 12, 12', 12", the selection unit 13, the version acquisition unit 14, the difference data transmission unit 15, the new/old data replacement unit 16, the unnecessary difference deletion unit 17, the new/old difference data replacement unit 19, the difference data storage information table 21a, the third difference data generation unit 25 and the difference data storage information table 21b, the data storage unit 20a, 20b, 20b', the difference data storage unit 18, the first difference data storage unit 181, 181', 181d, and the second difference data storage unit 182 are provided to the data management server 2a, 2a', 2a", 2b, 2b', 2c, however, this does not constitute a limit, and functions of a part of these my be split to more than one other computers connected each other communicably.

Further, in each of embodiments mentioned above and modifications thereof, one information processing apparatus 3 is connected to the data management server 2a, 2a', 2a", 2b, 2b', 2c, however, this does not constitute a limit, and alternatively, more than two information processing apparatus 3 may be connected to the data management server 2a, 2a', 2a", 2b, 2b', 2c, and transmission of a difference data or the like may be performed with each of these information processing apparatus 3 in an attempt to present the latest version data.

Further, in the third embodiment mentioned above, the third difference data generation unit 25 may generate a difference data with a similar method as used by the second difference data generation unit 12', 12" in the first modification and the second modification.

With the disclosure of each of embodiments of the present invention, it is possible for one skilled in the art to execute and manufacture the data management system, the data management apparatus, the data management method, the data supplying system, the data management program, and the computer readable recording media on which is recorded the program of the present invention.

### Industrial Applicability

As mentioned above, a data management system, a data management apparatus, a data management method, a data supplying system, a data management program, and a computer readable recording media on which is recorded a program of the present invention are useful for executing version management of data in an information processing apparatus and are well suited for revision management of programs and data in, for example, mobile phones, computers or the like.

## Claims

1. A data management system which is connected communicapably with an information processing apparatus capable of storing a data, manages the data of a plurality of versions and then manages the data in an attempt to present the information processing apparatus the data of a latest version comprising:
a latest version data entry unit (10) capable of entering a data of said latest version (Ver. N);
a data storage unit (20a) for storing a data, which is older than the latest version and is a latest version (Ver. N-1) in the data management system;
a difference data storage unit (18) for storing a difference data which can be revised from each of versions older than a data stored in said data storage unit (20a) to the version (Ver. N-1) same as a data stored in said data storage unit (20a);
a first difference data generation unit (11a) for generating a difference data which can be revised, based on a data (Ver. N-1) stored in the data storage unit (20a) and a data of said latest version (Ver. N) entered by the latest version data entry unit (10), from a data stored in the data storage unit (20a) to a data of said latest version (Ver. N); and
a second difference data generation unit (12, 12', 12") for generating a difference data which can be revised, based on the difference data stored in the difference data storage unit (18) and the difference data generated by the first difference data generation unit (11a), from each of versions older than a data stored in said data storage unit (20a) to a data of said latest version (Ver. N).

2. The data management system according to Claim 1 comprising:
a new/old difference data replacement unit (19) for replacing a difference data stored in said difference data storage unit (18) with a difference data generated by said first difference data generation unit (11a) and a difference data generated by said second difference data generation unit (12, 12', 12"); and
a new/old data replacement unit (16) for replacing a data stored in said data storage unit (20a) with a data of said latest version (Ver. N) entered from said latest version data entry unit (10).

3. The data management system according to Claim 2, wherein said difference data storage unit (18) has a plurality of difference data and,
wherein the data management system further comprises;
a selection unit (13) for selecting one difference data from a plurality of said difference data, according to a version of the data stored in an information processing apparatus; and
a presentation unit (15) for presenting the difference data selected by the selection unit (13) to the information processing apparatus.

4. The data management system according to any one of Claims 1 to 3, wherein, the second difference data generation unit (12) performs, based on the difference data stored in the difference data storage unit (18), and on the difference data generated by the first difference data generation unit (11a), the steps of:
setting copying, for such a portion where both a difference data stored in said difference data storage unit (18) and a difference data generated by said first difference data generation unit (11a) denote "copying", to the position in a difference data to be generated;
setting new, for such a portion where at least one of a difference data stored in said difference data storage unit (18) and a difference data generated by said first difference data generation unit (11a) denotes "new", to the position in a difference data to be generated;
setting movement, for such a portion where a difference data stored in said difference data storage unit (18) is "movement" and a difference data generated by said first difference data generation unit (11a) denotes "copying" or "movement", and for such a portion where a difference data stored in said difference data storage unit (18) denotes "copying" and a difference data generated by said first difference data generation unit (11a) denotes "movement", to the position in a difference data to be generated.

5. The data management system according to any one of Claims 1 to 3, wherein the second difference data generation unit (12'), based on the difference data stored in the difference data storage unit (18), and on the difference data generated by the first difference data generation unit (11a), (i) generates a second dummy data of the same version (Ver. N-1) of a data stored in said data storage unit (20a) by applying the difference data stored in said difference data storage unit (18) to a first dummy data generated based on a data of a version older than a data stored in said data storage unit (20a), (ii) generates a third dummy data of the same version of a data of said latest version (Ver. N) and then by applying a difference data generated by said first difference data generation unit (11a) to the second dummy data, and (iii) generates a difference data, which can be revised from each of versions older than a data stored in said data storage unit (20a) to a data of said latest version (Ver. N), based on the third dummy data.

6. The data management system according to any one of Claims 1 to 3, wherein the second difference data generation unit (12"), based on a difference data stored in the second difference data storage unit (18), on a difference data generated by said first difference data generation unit (11a), and on a data of said latest version (Ver. N) entered by the latest version data entry unit (10), performs the steps of:
(1) generating a first dummy data based on a first dummy empty data (empty data of Ver. N-1), on a data of said latest version (Ver. N) entered by the latest version data entry unit (10), and on a difference data (from Ver. N-1 to Ver. N) generated by said first difference data generation unit (11a), by analyzing a difference data (from Ver. N-1 to Ver. N) generated by said first difference data generation unit (11a), by copying a part of a data of said latest version (Ver. N) into the first dummy empty data, and by setting a dummy data in an area other than said copied data in the dummy empty data;
(2) generating a second dummy data based on a second dummy empty data (empty data of Ver. X), on the first dummy data, and on a difference data (From Ver. X to Ver. N-1) stored in said difference data storage unit (18), by analyzing a difference data (from Ver. X to Ver. N-1) stored in said difference data storage unit (18), by copying a part of said first dummy data into the second dummy empty data, and by setting a dummy data in an area other than said copied data in the second dummy empty data; and
(3) creating a difference data (From Ver. X to Ver. N) which can be revised from each of versions older than a data stored in said data storage unit (20a) to a data of said latest version (Ver. N) by comparison between the second dummy data and said latest version (Ver. N) data entered by the latest version data entry unit (10).

7. The data management system according to any one of Claims 1 to 6 comprising a difference data deletion unit (17) which is capable of selectively deleting, of a plurality of said difference data stored in the difference data storage unit (18), the difference data corresponding to a particular version.

8. A data management system which is connected communicapably with an information processing apparatus capable of storing a data, manages the data of a plurality of versions and then manages the data in an attempt to present the information processing apparatus the data of a latest version comprising:
a latest version data entry unit (10) capable of entering a data of said latest version (Ver. N);
a data storage unit (20b, 20b') for storing the data, older than said latest version (Ver. N);
a first difference data storage unit (181) for storing a plurality of difference data which can revise a data stored in said data storage unit (20b, 20b') to a data of each of a plurality of said versions (Ver. X);
a data creation unit (22) for creating, based on a data stored in said data storage unit (20b, 20b') and each of difference data stored in the first difference data storage unit (181), a data of each version (Ver. X);
a difference data generation unit (11b) for generating, based on a data of said each version (Ver. X) generated by the data generation unit (22) and on a data of said latest version (Ver. N) entered by the latest version data entry unit (10), a difference data which can be revised from a data of said each version (Ver. X) to a data of said latest version (Ver. N); and
a second difference data storage unit (182) for storing the difference data generated by the difference data generation unit (11b).

9. The data management system according to Claim 8, wherein of a plurality of said versions, the data of the oldest version is stored to the data storage unit (20b, 20b').

10. The data management system according to Claim 8 or Claim 9 comprising a new/old difference data replacement unit (19) which, when a difference data generated by said difference data generation unit is stored to the second difference data storage unit (182), replaces the difference data which can be revised from a data of said each version (Ver. X) stored in the second difference data storage unit (182) to the data of version (Ver. N-1) older than said latest version (Ver. N) with a difference data generated by said difference data generation unit (11b).

11. The data management system according to any one of Claims 8 to 10 comprising a difference data deletion unit (17) which is capable of selectively deleting, of a plurality of said difference data stored in the second difference data storage unit (182), the difference data corresponding to a particular version.

12. A data management system which is connected communicapably with an information processing apparatus capable of storing a data, manages the data of a plurality of versions and then manages the data in an attempt to present the information processing apparatus the data of a latest version comprising:
a latest version data entry unit (10) capable of entering a data of said latest version (Ver. N);
a data storage unit (20b) for storing the data older than said latest version (Ver. N);
a first difference data storage unit (181c) for storing a difference data which can revise a data stored in said data storage unit (20b) to a data of latest version (Ver. N-1) in the data management system, which version (Ver. N-1) is older than a latest version (Ver. N) entered from said latest version data entry unit (10);
a data creation unit (22) for creating, based on a data stored in said data storage unit (20b) and a difference data stored in the first difference data storage unit (181c), a data of a version (Ver. N-1) older than a latest version entered from said latest version data entry unit (10) and of latest version (Ver. N-1) in the data management system;
a first difference data generation unit (11c) for generating a difference data which can be revised, based on a data (Ver. N-1) created by the data creation unit (22) and a data of said latest version (Ver. N) entered from the latest version data entry unit (10), from a data of latest version (Ver. N-1) in the data management system, which is of a version (Ver. N-1) older than a latest version entered form said latest version data entry unit (10), to a data of latest version (Ver. N) entered from said latest version data entry unit (10);
a second difference data storage unit (182) for storing a difference data which can be revised from each of versions (Ver. X) older than a data of a latest version (Ver. N-1) in the data management to a version (Ver. N-1) same as a data of latest version (Ver. N-1) in the data management system; and
a second difference data generation unit (25) for creating a difference data which can be revised, based on the difference data stored in the second difference data storage unit (182) and the difference data generated by the first difference data generation unit (11c), from each of versions older than a data of a latest version (Ver. N-1) in the data management, which data older than a data of said latest version (Ver. N) entered from a latest version data entry unit (10), to a data of said latest version (Ver. N) entered from the latest version data entry unit (10).

13. A data management apparatus which is connected communicapably with an information processing apparatus capable of storing a data, manages the data of a plurality of versions and then manages the data in an attempt to present the information processing apparatus the data of a latest version comprising:
a latest version data entry unit (10) capable of entering a data of said latest version (Ver. N);
a data storage unit (20a) for storing a data of a latest version (Ver. N-1) in the data management system older than the latest version;
a difference data storage unit (18) for storing a difference data which can be revised from each of versions older than a data stored in said data storage unit (20a) to the same version (Ver. N-1) of a data stored in said data storage unit (20a);
a first difference data generation unit (11a) for generating a difference data which can be revised, based on a data stored in the data storage unit (20a) and a data of said latest version (Ver. N) entered by the latest version entry unit (10), from a data stored in the data storage unit (20a) to a data of said latest version (Ver. N); and
a second difference data generation unit (12, 12', 12") for generating a difference data which can be revised, based on the difference data stored in the difference data storage unit and the difference data generated by the first difference data generation unit (11a), from each of versions older than a data stored in said data storage unit (20a) to a data of said latest version (Ver. N).

14. A data management apparatus which is connected communicapably with an information processing apparatus capable of storing a data, manages the data of a plurality of versions and then manages the data in an attempt to present the information processing apparatus the data of a latest version comprising:
a latest version data entry unit (10) capable of entering a data of said latest version (Ver. N);
a data storage unit (20b, 20b') for storing the data of a version older than said latest version (Ver. N);
a first difference data storage unit (181) for storing a plurality of difference data which can revise the data stored in said data storage unit (20b, 20b') to a data of each of a plurality of said versions;
a data creation unit (22) for creating a data of each of versions (Ver. X) based on a data stored in said data storage unit (20b, 20b') and each of difference data stored in the first difference data storage unit (181);
a difference data generation unit (11b) for generating a difference data which can be revised, based on a data of each of said versions (Ver. X) created by the data creation unit (22) and a data of said latest version (Ver. N) entered by the latest version data entry unit (10), from a data of said each of versions to a data of said latest version (Ver. N); and
a second difference data storage unit (182) for storing the difference data generated by the difference data generation unit (11b).

15. A data management method for managing the data in an attempt to present an information processing apparatus capable of storing a data, the data of a latest version comprising:
a latest version data entry step for entering a data of said latest version (Ver. N);
a data storage step for storing a data of a latest version (Ver. N-1) in the data supplying system, which data older than the latest version;
a difference data storage step for storing a difference data which can be revised from each of versions older than a data stored in said data storage step to a version (Ver. N-1) same as a data stored in said data storage step;
a first difference generation step for generating a difference data which can be revised, based on a data stored in the data storage step (Ver. N-1) and a data of said latest version (Ver. N) entered in the latest version data entry step, from a data stored in the data storage step to a data of said latest version (Ver. N); and
a second difference generation step for generating a difference data which can be revised, based on the difference data stored in the difference data storage step and the difference data generated in the first difference generating step, from each of versions older than a data stored in said data storage step to a data of said latest version (Ver. N).

16. A data management method for managing the data in an attempt to present an information processing apparatus capable of storing a data, the data of a latest version comprising:
a latest version data entry step capable of entering a data of said latest version (Ver. N);
a data storage step for storing the data of version older than said latest version (Ver. N);
a first difference data storage step for storing a plurality of difference data which can revise the data stored in said data storage step to a data of each of a plurality of said versions;
a data creation step for creating a data of each of versions based on a data stored in said data storage step and each of difference data stored in the first difference data storage step;
a difference generation step for generating a difference data which can be revised, based on a data of each of said versions created in the data creation step and a data of said latest version (Ver. N) entered in the latest version data entry step, from a data of each of said versions to a data of said latest version (Ver. N); and
a second difference data storage step for storing the difference data generated in the difference generation step.

17. A data supplying system which is connected communicapably with an information processing apparatus capable of storing a revisable data, manages the data of a plurality of versions in an attempt to present the information processing apparatus the data of a latest version comprising:
a latest version data storage unit (20a) for storing a data of said latest version;
a difference data storage unit (18) for storing a plurality of difference data which can be revised from each of versions older than said latest version (Ver. N) to a data of said latest version;
a selection unit (13) for selecting from a plurality of said difference data stored in the difference data storage unit (18), one difference data according to a version of the data stored in the information management apparatus; and
a presentation unit (15) for presenting to the information processing apparatus the difference data selected by the selection unit (13).

18. A data supplying system which is connected communicapably with an information processing apparatus capable of storing a data, manages the data of a plurality versions in an attempt to present the information processing apparatus the data of a latest version comprising:
a data storage unit (20b) for storing the data of a version older than said latest version;
a first difference data storage unit (181) for storing a plurality of difference data which can revise a data stored in said data storage unit (20b) to a data of each of versions;
a second difference data storage unit (182) for storing a plurality of difference data which can be revised from each of versions older than said latest version to a data of said latest version;
a selection unit (13) for selecting from a plurality of said difference data stored in the second difference data storage unit (182), one difference data according to a version of the data stored in the information management apparatus; and
a presentation unit (15) for presenting to the information processing apparatus the difference data selected by the selection unit (13).

19. A data management program which causes a computer to execute a data management function that manages the data in an attempt to present an information processing apparatus capable of storing a data, the data of latest version, the program causing a computer to execute:
a latest version data entry step for entering a data of said latest version (Ver. N);
a data storage step for storing a data of a latest version (Ver. N-1) out of versions older than a data entered in said latest version data entry step, which data older than the latest version;
a difference data storage step for storing a difference data which can be revised from each of versions older than a data stored in said data storage step to the same version of a data stored in said data storage unit (20a);
a first difference generation step for generating a difference data which can be revised, based on a data (Ver. N-1) stored in the data storage step and a data of said latest version (Ver. N) entered in the latest version data entry step, from a data stored in the data storage step to a data of said latest version (Ver. N); and
a second difference generation step for generating a difference data which can be revised, based on the difference data stored in the difference data storage step and the difference data generated in the first difference generation step, from each of versions older than a data stored in said data storage step to a data of said latest version (Ver. N).

20. A data management program which causes a computer to execute a data management function that manages the data in an attempt to present an information processing apparatus capable of storing a data, the data of latest version, the program causing a computer to execute:
a latest version data entry step capable of entering a data of said latest version (Ver. N);
a data storage step for storing the data of version older than said latest version (Ver. N);
a first difference data storage step for storing a plurality of difference data which can revise the date stored in said data storage step to a data of each of a plurality of said versions;
a data creation step for creating a data of each of versions based on a data stored in said data storage step and each of difference data stored in the first difference data storage step;
a difference generation step for generating a difference data which can be revised, based on a data of each of said versions created in the data creation step and a data of said latest version (Ver. N) entered in the latest version data entry step, from a data of each of said versions to a data of said latest version (Ver. N); and
a second difference data storage step for storing the difference data generated in the difference generation step.

21. A computer-readable recording medium in which is recorded a data management program which causes a computer to execute a data management function that manages the data in an attempt to present an information processing apparatus capable of storing a data, the data of latest version, the data management program causing a computer to execute:
a latest version data entry step for entering a data of said latest version (Ver. N);
a data storage step for storing a data of latest version (Ver. N-1), of versions older than a data entered in said latest version data entry step;
a difference data storage step for storing a difference data which can be revised from each of versions older than a data stored in said data storage step to the same version of a data stored in said data storage unit (20a) ;
a first difference generation step for generating a difference data which can be revised, based on a data (Ver. N-1) stored in the data storage step and a data of said latest version (Ver. N) entered in the latest version data entry step, from a data stored in the data storage step to a data of said latest version (Ver. N); and
a second difference generation step for generating a difference data which can be revised, based on the difference data stored in the difference data storage step and the difference data generated in the first difference generation step, from each of versions older than a data stored in said data storage step to a data of said latest version (Ver. N).

22. A computer-readable recording medium in which is recorded a data management program which causes a computer to execute a data management function that manages the data in an attempt to present an information processing apparatus capable of storing a data, the data of latest version, the data management program causing a computer to execute:
a latest version data entry step capable of entering a data of said latest version (Ver. N);
a data storage step for storing the data of older version than said latest version (Ver. N);
a first difference data storage step for storing a plurality of difference data which can revise the data stored in said data storage step to a data of a plurality of said versions;
a data creation step for creating a data of each of versions based on a data stored in said data storage step and each of difference data stored in the first difference data storage step;
a difference generation step for generating a difference data which can be revised, based on a data of each of said versions created in the data creation step and a data of said latest version (Ver. N) entered in the latest version data entry step, from a data of said each of versions to a data of said latest version (Ver. N); and
a second difference data storage step for storing the difference data generated in the difference generation step.
